(19) **Europäisches Patentamt / European Patent Office / Office européen des brevets**

(11) **EP 4 546 924 A1**

(12) **EUROPEAN PATENT APPLICATION**
published in accordance with Art. 153(4) EPC

(43) Date of publication:
**30.04.2025 Bulletin 2025/18**

(21) Application number: **23827254.6**

(22) Date of filing: **22.06.2023**

(51) International Patent Classification (IPC):
**H04W 72/231** $^{(2023.01)}$      **H04W 16/28** $^{(2009.01)}$
**H04W 28/16** $^{(2009.01)}$      **H04W 72/232** $^{(2023.01)}$

(52) Cooperative Patent Classification (CPC):
**H04W 16/28; H04W 28/16; H04W 72/231; H04W 72/232**

(86) International application number:
**PCT/JP2023/023080**

(87) International publication number:
**WO 2023/249072 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.06.2022 JP 2022100122**

(71) Applicant: **Sharp Kabushiki Kaisha
Sakai City, Osaka 590-8522 (JP)**

(72) Inventors:
• **FUKUI Takahisa
Sakai-ku, Sakai City
Osaka 590-8522 (JP)**

• **YOKOMAKURA Kazunari
Sakai-ku, Sakai City
Osaka 590-8522 (JP)**
• **MORIMOTO Ryota
Sakai-ku, Sakai City
Osaka 590-8522 (JP)**
• **WAN Hua
Sakai-ku, Sakai City
Osaka 590-8522 (JP)**

(74) Representative: **Müller-Boré & Partner
Patentanwälte PartG mbB
Friedenheimer Brücke 21
80639 München (DE)**

(54) **TERMINAL DEVICE, BASE STATION DEVICE, AND COMMUNICATION METHOD**

(57)     A terminal apparatus includes a generator configured to generate an SRS sequence, a transmitter configured to transmit an SRS resource to which the SRS sequence is mapped, and a radio resource control layer processing unit configured to receive a higher layer parameter. The SRS resource includes at least a first number of OFDM symbols, the SRS sequence is determined based at least on a cyclic shift, the cyclic shift is determined based at least on an initial cyclic shift value, the initial cyclic shift value is determined for every second number of OFDM symbols, the second number of OFDM symbols is determined based on the higher layer parameter, and the second number of OFDM symbols is less than or the same as the first number of OFDM symbols.

EP 4 546 924 A1

SRS resource 900

$$e^{j(\alpha_i k' + \alpha' l'')}$$

| -1 | -1 | 1 | 1 |
|----|----|----|----|
| 1 | 1 | -1 | -1 |
| -1 | -1 | 1 | 1 |
| 1 | 1 | -1 | -1 |
| -1 | -1 | 1 | 1 |
| 1 | 1 | -1 | -1 |

$\longleftrightarrow$ Symbol set 920 $\longleftrightarrow$ Symbol set 921

Subcarrier k'

$\longleftrightarrow$ Symbol 910 $\longleftrightarrow$ Symbol 911 $\longleftrightarrow$ Symbol 912 $\longleftrightarrow$ Symbol 913

OFDM symbol l'

FIG. 9

## Description

Technical Field

The present invention relates to a terminal apparatus, a base station apparatus, and a communication method.

This application claims priority to JP 2022-100122 filed on June 22, 2022, the contents of which are incorporated herein by reference.

Background Art

In the 3rd Generation Partnership Project (3GPP, trade name), a radio access method and a radio network for cellular mobile communications (hereinafter also referred to as "Long Term Evolution (LTE)" or "Evolved Universal Terrestrial Radio Access (EUTRA)") have been studied. In LTE, a base station apparatus is also referred to as an evolved NodeB (eNodeB) and a terminal apparatus is also referred to as a User Equipment (UE). LTE is a cellular communication system in which multiple areas covered by base station apparatuses are arranged in the form of cells. A single base station apparatus may manage multiple serving cells.

The 3GPP has been studying a next generation standard (New Radio or NR) (NPL 1) to make a proposal for International Mobile Telecommunication (IMT)-2020, a standard for a next generation mobile communication system developed by the International Telecommunication Union (ITU). NR is to satisfy requirements for three scenarios including enhanced Mobile BroadBand (eMBB), massive Machine Type Communication (mMTC), and Ultra Reliable and Low Latency Communication (URLLC) in a single technology framework.

In the 3GPP, extension of services supported by NR has been studied (NPL 2).

Citation List

Non Patent Literature

NPL 1: "New SID proposal: Study on New Radio Access Technology", RP-160671, NTT docomo, 3GPP TSG RAN Meeting #71, Goteborg, Sweden, 7th - 10th March, 2016.

NPL 2: "Release 17 package for RAN", RP-193216, RAN chairman, RAN1 chairman, RAN2 chairman, RAN3 chairman, 3GPP TSG RAN Meeting #86, Sitges, Spain, 9th - 12th December, 2019

NPL 3: "Release 18 package summary", RP-213469, RAN chairman, RAN1 chairman, RAN2 chairman, RAN3 chairman, 3GPP TSG RAN Meeting #94-e, 6th-17th December, 2021

Summary of Invention

Technical Problem

An aspect of the present invention provides a terminal apparatus that efficiently performs communication, a communication method used for the terminal apparatus, a base station apparatus that efficiently performs communication, and a communication method used for the base station apparatus.

Solution to Problem

(1) A first aspect of the present invention is a terminal apparatus including a generator configured to generate an SRS sequence, a transmitter configured to transmit an SRS resource to which the SRS sequence is mapped, and a radio resource control layer processing unit configured to receive a higher layer parameter, wherein the SRS resource includes at least a first number of OFDM symbols, the SRS sequence is determined based at least on a cyclic shift, the cyclic shift is determined based at least on an initial cyclic shift value, the initial cyclic shift value is determined for every second number of OFDM symbols, the second number of OFDM symbols is determined based on the higher layer parameter, and the second number of OFDM symbols is less than or the same as the first number of OFDM symbols.

(2) A second aspect of the present invention is a base station apparatus including a receiver configured to receive an SRS resource to which an SRS sequence is mapped, and a radio resource control layer processing unit configured to transmit a higher layer parameter, wherein the SRS sequence is generated, the SRS resource includes at least a first number of OFDM symbols, the SRS sequence is determined based at least on a cyclic shift, the cyclic shift is determined based at least on an initial cyclic shift value, the initial cyclic shift value is determined for every second number of OFDM symbols, the second number of OFDM symbols is determined based on the higher layer parameter, and the second number of OFDM symbols is less than or the same as the first number of OFDM symbols.

(3) A third aspect of the present invention is a communication method used for a terminal apparatus, the communication method including generating an SRS sequence, transmitting an SRS resource to which the SRS sequence is mapped, and receiving a higher layer parameter, wherein the SRS resource includes at least a first number of OFDM symbols, the SRS sequence is determined based at least on a cyclic shift, the cyclic shift is determined based at least on an initial cyclic shift value, the initial cyclic shift value is determined for every second number of OFDM symbols, the second number of OFDM symbols is determined based on the higher layer parameter, and the second number of OFDM symbols is less than or the same as the first number of OFDM symbols.

(4) A fourth aspect of the present invention is a communication method used for a base station apparatus, the communication method including receiving an SRS resource to which an SRS sequence is mapped, and transmitting a higher layer parameter, wherein the SRS sequence is generated, the SRS resource includes at least a first number of OFDM symbols, the SRS sequence is determined based at least on a cyclic shift, the cyclic shift is determined based at least on an initial cyclic shift value, the initial cyclic shift value is determined for every second number of OFDM symbols, the second number of OFDM symbols is determined based on the higher layer parameter, and the second number of OFDM symbols is less than or the same as the first number of OFDM symbols.

Advantageous Effects of Invention

According to an aspect of the present invention, the terminal apparatus can efficiently perform communication. The base station apparatus can efficiently perform communication.

Brief Description of Drawings

FIG. 1 is a conceptual diagram of a radio communication system according to an aspect of the present embodiment.
FIG. 2 is an example illustrating a relationship between the subcarrier spacing configuration $\mu$, the number of OFDM symbols per slot $N^{slot}_{symb}$, and a cyclic Prefix (CP) configuration according to an aspect of the present embodiment.
FIG. 3 is a diagram illustrating an example of a configuration method of a resource grid according to an aspect of the present embodiment.
FIG. 4 is a diagram illustrating a configuration example of a resource grid 3001 according to an aspect of the present embodiment.
FIG. 5 is a schematic block diagram illustrating a configuration example of a base station apparatus 3 according to an aspect of the present embodiment.
FIG. 6 is a schematic block diagram illustrating a configuration example of a terminal apparatus 1 according to an aspect of the present embodiment.
FIG. 7 is a diagram illustrating a configuration example of an SS/PBCH block according to an aspect of the present embodiment.
FIG. 8 is a diagram illustrating an example of monitoring occasions for search space sets according to an aspect of the present embodiment.
FIG. 9 is a diagram illustrating an example of cyclic shift hopping for SRS according to an aspect of the present embodiment.

Description of Embodiments

An embodiment of the present invention will be described below.
floor(C) may be a floor function for a real number C. For example, floor(C) may be a function that outputs a maximum integer in a range of not exceeding the real number C. ceil(D) may be a ceiling function for a real number D. For example, ceil(D) may be a function that outputs a minimum integer in a range of not falling below the real number D. mod(E, F) may be a function that outputs a remainder obtained by dividing E by F. mod(E, F) may be a function that outputs a value corresponding to the remainder obtained by dividing E by F. exp(G) = e^G. Here, e is a Napier's constant. H^I represents H to the power of I. max(J, K) is a function that outputs a maximum value out of J and K. Here, in a case that J and K are equal, max(J, K) is a function that outputs J or K. min(L, M) is a function that outputs a maximum value out of L and M. Here, in a case that L and M are equal, min(L, M) is a function that outputs L or M. round(N) is a function that outputs an integer value of a value closest to N. "·" represents multiplication.

In the radio communication system according to an aspect of the present embodiment, at least Orthogonal Frequency Division Multiplex (OFDM) is used. The OFDM symbol is a time domain unit of the OFDM. The OFDM symbol includes at least one or multiple subcarriers. The OFDM symbol is converted into a time-continuous signal in baseband signal generation. In a downlink, at least Cyclic Prefix-Orthogonal Frequency Division Multiplex (CP-OFDM) is used. In an uplink, either CP-OFDM or Discrete Fourier Transform-spread-Orthogonal Frequency Division Multiplex (DFT-s-OFDM) is used. DFT-s-OFDM may be given by applying Transform precoding to the CP-OFDM.

The OFDM symbol may be a term including a CP added to the OFDM symbol. That is, a certain OFDM symbol may include the certain OFDM symbol and the CP added to the certain OFDM symbol.

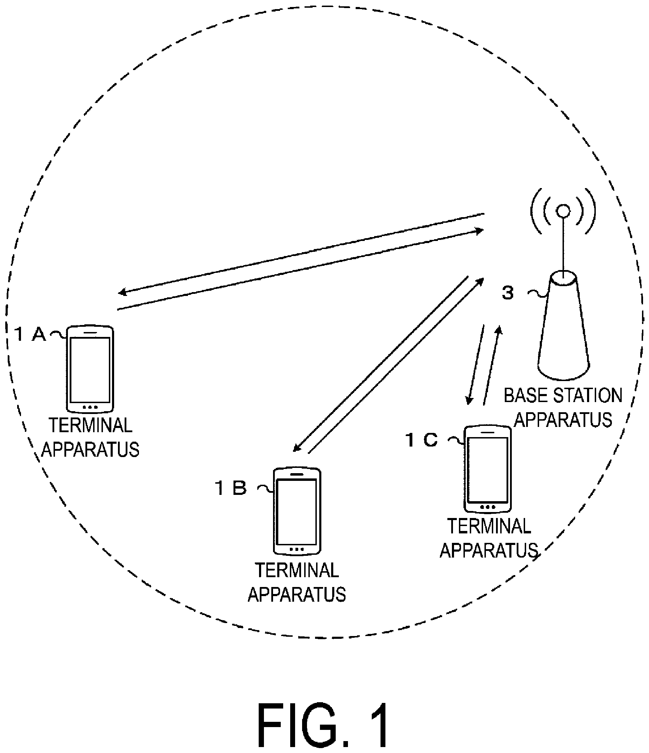

FIG. 1 is a conceptual diagram of a radio communication system according to an aspect of the present embodiment. In FIG. 1, the radio communication system includes at least terminal apparatuses 1A to 1C and a base station apparatus 3 (Base station #3 (BS #3)). Hereinafter, the terminal apparatuses 1A to 1C are also referred to as a terminal apparatus 1 (User Equipment #1 (UE #1)).

The base station apparatus 3 may include one or multiple transmission apparatuses (or transmission points, transmission and/or reception apparatuses, transmission and/or reception points). In a case that the base station apparatus 3 includes multiple transmission apparatuses, the multiple transmission apparatuses may be arranged at different positions.

The base station apparatus 3 may provide one or multiple serving cells. Each serving cell may be defined as a set of resources used for radio communication. The serving cell is also referred to as a cell.

The serving cell may include one or both of one downlink component carrier (downlink carrier) and one uplink component carrier (uplink carrier). The serving cell may include either or both of two or more downlink component carriers, and/or two or more uplink component carriers. The downlink component carrier and the uplink component carrier are also collectively referred to as a component carrier (carrier).

For example, for each component carrier, one resource grid may be given. For each set of one component carrier and a certain subcarrier spacing configuration $\mu$, one resource grid may be given. Here, the subcarrier spacing configuration $\mu$ is also referred to as numerology. For example, for a set of a certain antenna port p, a certain subcarrier spacing configuration $\mu$, and a certain transmission direction x, one resource grid may be given.

The resource grid includes $N^{size, \mu}_{grid, x} N^{RB}_{sc}$ subcarriers. Here, the resource grid starts from a common resource block $N^{start, \mu}_{grid, x}$. The common resource block $N^{start, \mu}_{grid, x}$ is also referred to as a reference point of the resource grid.

The resource grid includes $N^{subframe, \mu}_{symb}$ OFDM symbols.

The subscript x added to the parameter associated with the resource grid indicates the transmission direction. For example, the subscript x may be used to indicate either of a downlink or an uplink.

$N^{size, \mu}_{grid, x}$ is an offset configuration indicated by a parameter provided by the RRC layer (e.g., parameter CarrierBandwidth). $N^{start, \mu}_{grid, x}$ is a band configuration indicated by a parameter provided by the RRC layer (e.g., parameter, OffsetToCarrier). The offset configuration and the band configuration are configurations used for configuring an SCS-specific carrier.

The SubCarrier Spacing (SCS) $\Delta f$ for a certain subcarrier spacing configuration $\mu$ may be $\Delta f = 2^{\mu} * 15$ kHz. Here, the subcarrier spacing configuration $\mu$ may indicate one of 0, 1, 2, 3, or 4.

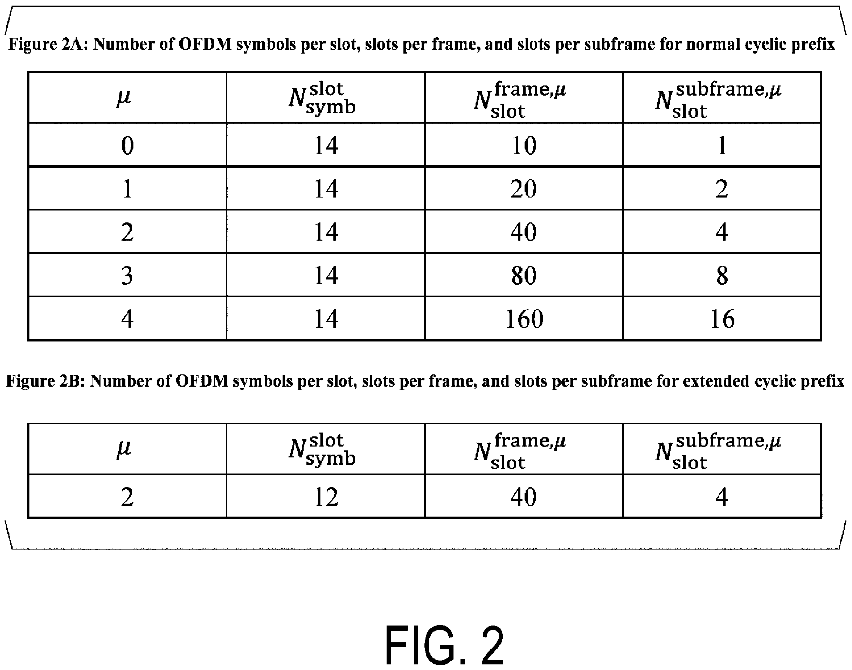

FIG. 2 is an example illustrating a relationship between the subcarrier spacing configuration $\mu$, the number of OFDM symbols per slot $N^{slot}_{symb}$, and a cyclic Prefix (CP) configuration according to an aspect of the present embodiment. In FIG. 2A, for example, in a case that the subcarrier spacing configuration $\mu$ is two and the CP configuration is a normal cyclic prefix (normal CP), $N^{slot}_{symb} = 14$, $N^{frame, \mu}_{slot} = 40$, and $N^{subframe, \mu}_{slot} = 4$. In FIG. 2B, for example, in a case that the subcarrier spacing configuration $\mu$ is two and the CP configuration is an extended cyclic prefix (extended CP), $N^{slot}_{symb} = 12$, $N^{frame, \mu}_{slot} = 40$, and $N^{subframe, \mu}_{slot} = 4$.

The time unit $T_c$ may be used to represent the length of the time domain. The time unit $T_c$ is $T_c = 1 / (\Delta f_{max} \cdot N_f)$. $\Delta f_{max} = 480$ kHz. $N_f = 4096$. A constant $\kappa$ is $\kappa = \Delta f_{max} \cdot N_f / (\Delta f_{ref} N_{f, ref}) = 64$. $\Delta f_{ref}$ is 15 kHz. $N_{f, ref}$ is 2048.

Transmission of a signal in the downlink and/or transmission of a signal in the uplink may be organized into a radio frame (system frame, frame) having the length $T_f$. $T_f = (\Delta f_{max} N_f / 100) \cdot T_s = 10$ ms. The radio frame includes 10 subframes. The length $T_{sf}$ of the subframe is $(\Delta f_{max} N_f / 1000) \cdot T_s = 1$ ms. The number of OFDM symbols per subframe is $N^{subframe, \mu}_{symb} = N^{slot}_{symb} N^{subframe, \mu}_{slot}$.

The OFDM symbol is a time domain unit of one communication scheme. For example, the OFDM symbol may be a time domain unit of CP-OFDM. The OFDM symbol may be a time domain unit of DFT-s-OFDM.

The slot may include multiple OFDM symbols. For example, $N^{slot}_{symb}$ continuous OFDM symbols may constitute one slot. For example, in normal CP configuration, $N^{slot}_{symb}$ may be 14. In extended CP configuration, $N^{slot}_{symb}$ may be 12.

For a certain subcarrier spacing configuration $\mu$, the number and indices of slots included in the subframe may be given. For example, slot indices $n^{\mu}_s$ may be given in ascending order in the subframe with integer values within a range of 0 to $N^{subframe, \mu}_{slot} - 1$. For the subcarrier spacing configuration $\mu$, the number and indices of slots included in the radio frame may be given. Slot indices $n^{\mu}_{s, f}$ may be given in ascending order in the radio frame with integer values within a range of 0 to

$N^{frame, \mu}_{slot} - 1$.

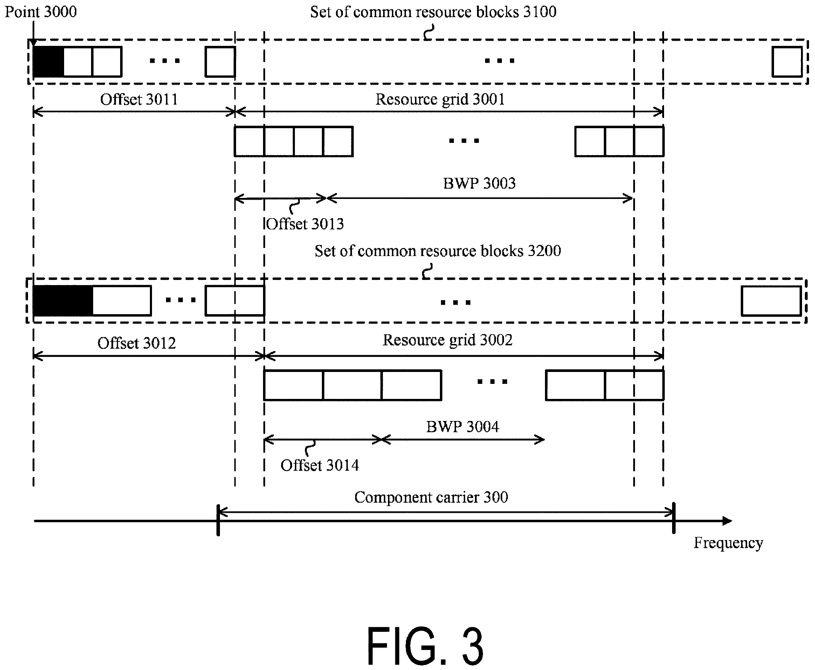

FIG. 3 is a diagram illustrating an example of a configuration method of the resource grid according to an aspect of the present embodiment. The horizontal axis of FIG. 3 represents a frequency domain. FIG. 3 illustrates a configuration example of a resource grid of a subcarrier spacing $\mu_1$ in a component carrier 300, and a configuration example of a resource grid of a subcarrier spacing $\mu_2$ in the certain component carrier. As described above, for a certain component carrier, one or multiple subcarrier spacings may be configured. In FIG. 3, it is assumed that $\mu_1 = \mu_2 - 1$, but various aspects of the present embodiment are not limited to the condition of $\mu_1 = \mu_2 - 1$.

The component carrier 300 is a band having a predetermined width in the frequency domain.

A Point 3000 is an identifier for identifying a certain subcarrier. The point 3000 is also referred to as a point A. A Common resource block (CRB) set 3100 is a set of common resource blocks for the subcarrier spacing configuration $\mu_1$.

In the common resource block set 3100, a common resource block (solid black block in the common resource block set 3100 in FIG. 3) including the point 3000 is also referred to as a reference point of the common resource block set 3100. The reference point of the common resource block set 3100 may be a common resource block having an index of 0 in the common resource block set 3100.

An offset 3011 is an offset from the reference point of the common resource block set 3100 to a reference point of a resource grid 3001. The offset 3011 is represented by the number of common resource blocks for the subcarrier spacing configuration $\mu_1$. The resource grid 3001 includes $N^{size, \mu_1}_{grid1, x}$ common resource blocks starting from the reference point of the resource grid 3001.

An offset 3013 is an offset from the reference point of the resource grid 3001 to a reference point($N^{start, \mu}_{BWP, i1}$) of a BandWidth Part (BWP) 3003 having an index of i1.

A common resource block set 3200 is a set of common resource blocks for the subcarrier spacing configuration $\mu_2$.

In the common resource block set 3200, a common resource block (solid black block in the common resource block set 3200 in FIG. 3) including the point 3000 is also referred to as a reference point of the common resource block set 3200. The reference point of the common resource block set 3200 may be a common resource block having an index of 0 in the common resource block set 3200.

An offset 3012 is an offset from the reference point of the common resource block set 3200 to a reference point of a resource grid 3002. The offset 3012 is represented by the number of common resource blocks for the subcarrier spacing $\mu_2$. The resource grid 3002 includes $N^{size, \mu}_{grid2, x}$ common resource blocks starting from the reference point of the resource grid 3002.

An offset 3014 is an offset from the reference point of the resource grid 3002 to a reference point($N^{start, \mu}_{BWP, i2}$) of a BWP 3004 having an index of i2.

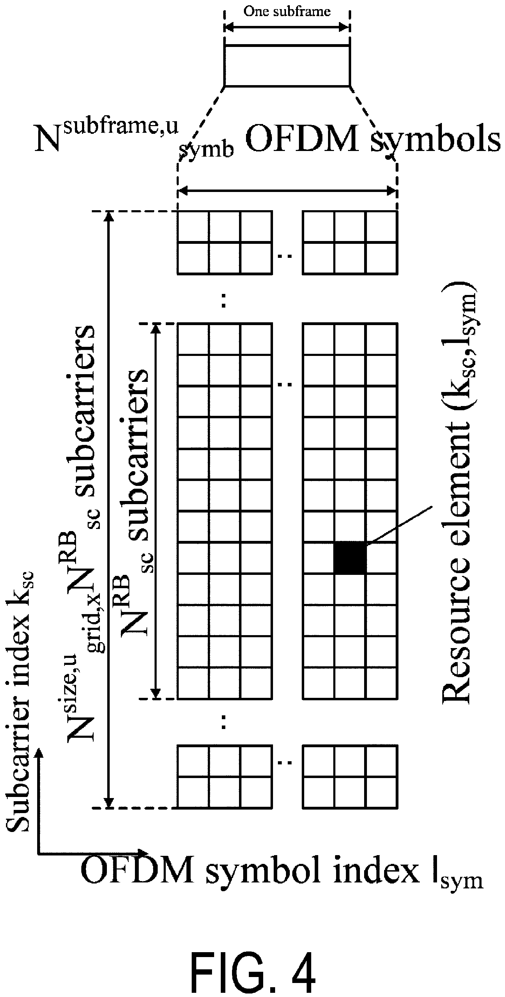

FIG. 4 is a diagram illustrating a configuration example of the resource grid 3001 according to an aspect of the present embodiment. In the resource grid of FIG. 4, the horizontal axis corresponds to an OFDM symbol index $l_{sym}$, and the vertical axis corresponds to a subcarrier index $k_{sc}$. The resource grid 3001 includes $N^{size, \mu}_{grid1, x} N^{RB}_{sc}$ subcarriers, and $N^{subframe, \mu}_{symb}$ OFDM symbols. In the resource grid, a resource identified by the subcarrier index $k_{sc}$ and the OFDM symbol index $l_{sym}$ is also referred to as a Resource Element (RE).

The Resource Block (RB) includes $N^{RB}_{sc}$ consecutive subcarriers. The resource block is a general term for a common resource block, a Physical Resource Block (PRB), and a Virtual Resource Block (VRB). Here, $N^{RB}_{sc}$ is 12.

A resource block unit is a set of resources corresponding to one OFDM symbol in one resource block. That is, one resource block unit includes 12 resource elements corresponding to one OFDM symbol in one resource block.

The common resource blocks for a certain subcarrier spacing configuration $\mu$ are assigned indices in ascending order from 0 in the frequency domain in a certain common resource block set (indexing). The common resource block having an index of 0 for a certain subcarrier spacing configuration $\mu$ includes (or collides with, matches) the point 3000. An index $n^{\mu}_{CRB}$ of the common resource block for a certain subcarrier spacing configuration $\mu$ satisfies a relationship of $n^{\mu}_{CRB} = ceil(k_{sc} / N^{RB}_{sc})$. Here, a subcarrier with $k_{sc} = 0$ is a subcarrier having the same center frequency as the center frequency of a subcarrier corresponding to the point 3000.

Physical resource blocks for a certain subcarrier spacing configuration $\mu$ are assigned indices in ascending order from 0 in the frequency domain in a certain BWP. An index $n^{\mu}_{PRB}$ of the physical resource block for a certain subcarrier spacing configuration $\mu$ satisfies a relationship of $n^{\mu}_{CRB} = n^{\mu}_{PRB} + N^{start, \mu}_{BWP, i}$. Here, $N^{start, \mu}_{BWP, i}$ indicates a reference point of the BWP having an index of i.

The BWP is defined as a subset of common resource blocks included in the resource grid. The BWP includes $N^{size, \mu}_{BWP, i}$ common resource blocks starting from the reference point $N^{start, \mu}_{BWP, i}$ of the BWP. The BWP configured for the downlink carrier is also referred to as a downlink BWP. The BWP configured for the uplink component carrier is also referred to as an uplink BWP.

An antenna port is defined such that the channel over which a symbol on the antenna port is conveyed can be inferred from the channel over which another symbol on the same antenna port is conveyed. For example, the channel may correspond to a physical channel. The symbol may correspond to an OFDM symbol. The symbol may also correspond to the resource block unit. The symbol may correspond to the resource element.

The fact that a large scale property of a channel over which a symbol on one antenna port is conveyed can be inferred from a channel over which a symbol on another antenna port is conveyed is referred to as the two antenna ports being Quasi Co-Located (QCL). Here, the large scale property may include at least long term performance of a channel. The large scale property may include at least a part or all of delay spread, Doppler spread, Doppler shift, an average gain, an average delay, and a beam parameter (spatial Rx parameters). The fact that the first antenna port and the second antenna port are QCL with respect to a beam parameter may mean that a reception beam assumed by a receiver side for the first antenna port and a reception beam assumed by the receiver side for the second antenna port are the same (or the reception beams correspond to each other). The fact that the first antenna port and the second antenna port are QCL with respect to a beam parameter may mean that a transmission beam assumed by a receiver side for the first antenna port and a transmission beam assumed by the receiver side for the second antenna port are the same (or the transmission beams correspond to each other). In a case that the large scale property of a channel over which a symbol on one antenna port is conveyed can be inferred from a channel over which a symbol on another antenna port is conveyed, the terminal apparatus 1 may assume that the two antenna ports are QCL. The fact that two antenna ports are QCL may mean that the two antenna ports are assumed to be QCL.

Carrier aggregation may mean that communication is performed by using multiple serving cells being aggregated. Carrier aggregation may mean that communication is performed by using multiple component carriers being aggregated. Carrier aggregation may mean that communication is performed by using multiple downlink component carriers being aggregated. Carrier aggregation may mean that communication is performed by using multiple uplink component carriers being aggregated.

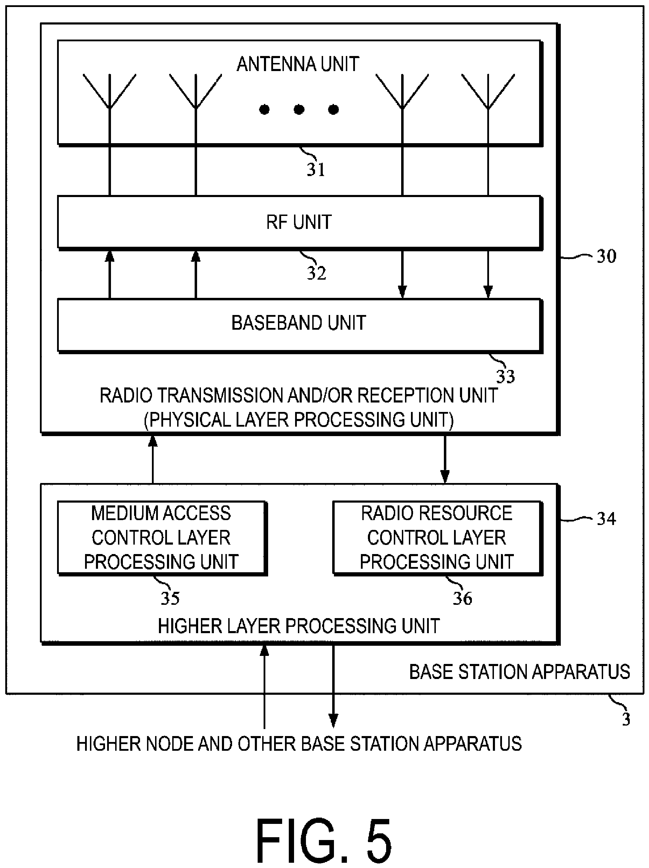

FIG. 5 is a schematic block diagram illustrating a configuration example of the base station apparatus 3 according to an aspect of the present embodiment. As illustrated in FIG. 5, the base station apparatus 3 includes at least a part or all of a radio transmission and/or reception unit (physical layer processing unit) 30 and/or a Higher layer processing unit 34. The radio transmission and/or reception unit 30 includes at least a part or all of an antenna unit 31, a Radio Frequency (RF) unit 32, and a baseband unit 33. The higher layer processing unit 34 includes at least a part or all of a medium access control layer processing unit 35 and a Radio Resource Control (RRC) layer processing unit 36.

The radio transmission and/or reception unit 30 includes at least a part or all of a radio transmission unit 30a and a radio reception unit 30b. Here, apparatus configurations of the baseband unit included in the radio transmission unit 30a and the baseband unit included in the radio reception unit 30b may be the same or different from each other. Apparatus configurations of the RF unit included in the radio transmission unit 30a and the RF unit included in the radio reception unit 30b may be the same or different from each other. Apparatus configurations of the antenna unit included in the radio transmission unit 30a and the antenna unit included in the radio reception unit 30b may be the same or different from each other.

For example, the radio transmission unit 30a may generate and transmit a baseband signal of the PDSCH. For example, the radio transmission unit 30a may generate and transmit a baseband signal of the PDCCH. For example, the radio transmission unit 30a may generate and transmit a baseband signal of the PBCH. For example, the radio transmission unit 30a may generate and transmit a baseband signal of a synchronization signal. For example, the radio transmission unit 30a may generate and transmit a baseband signal of the PDSCH DMRS. For example, the radio transmission unit 30a may generate and transmit a baseband signal of the PDCCH DMRS. For example, the radio transmission unit 30a may generate and transmit a baseband signal of the CSI-RS. For example, the radio transmission unit 30a may generate and transmit a baseband signal of the DL PTRS. For example, a generator of the radio transmission unit 30a may generate a baseband signal of the PBCH.

For example, the radio reception unit 30b may receive the PRACH. For example, the radio reception unit 30b may receive and demodulate the PUCCH. The radio reception unit 30b may receive and demodulate the PUSCH. For example, the radio reception unit 30b may receive the PUCCH DMRS. For example, the radio reception unit 30b may receive the PUSCH DMRS. For example, the radio reception unit 30b may receive the UL PTRS. For example, the radio reception unit 30b may receive the SRS.

The higher layer processing unit 34 outputs downlink data (a transport block) to the radio transmission and/or reception unit 30 (or the radio transmission unit 30a). The higher layer processing unit 34 performs processing operations of a Medium Access Control (MAC) layer, a Packet Data Convergence Protocol (PDCP) layer, a Radio Link Control (RLC) layer, and an RRC layer.

The medium access control layer processing unit 35 included in the higher layer processing unit 34 performs processing of the MAC layer.

The radio resource control layer processing unit 36 included in the higher layer processing unit 34 performs processing of the RRC layer. The radio resource control layer processing unit 36 manages various pieces of configuration information/parameters (RRC parameters) of the terminal apparatus 1. The radio resource control layer processing unit 36 sets the parameter based on an RRC message received from the terminal apparatus 1.

The radio transmission and/or reception unit 30 (or the radio transmission unit 30a) performs processing such as modulation and encoding. The radio transmission and/or reception unit 30 (or the radio transmission unit 30a) generates a physical signal through modulation, encoding, and baseband signal generation (conversion into the time-continuous signal) on the downlink data, and transmits the physical signal to the terminal apparatus 1. The radio transmission and/or reception unit 30 (or the radio transmission unit 30a) may map the physical signal to a certain component carrier and transmit the physical signal to the terminal apparatus 1.

The radio transmission and/or reception unit 30 (or the radio reception unit 30b) performs processing such as demodulation and decoding. The radio transmission and/or reception unit 30 (or the radio reception unit 30b) separates, demodulates, and decodes the received physical signal, and outputs the decoded information to the higher layer processing unit 34. The radio transmission and/or reception unit 30 (or the radio reception unit 30b) may perform a channel access procedure prior to transmission of the physical signal.

The RF unit 32 converts (down converts) a signal received via the antenna unit 31 into a baseband signal by means of quadrature demodulation and removes unnecessary frequency components. The RF unit 32 outputs a processed analog signal to the baseband unit.

The baseband unit 33 converts an analog signal input from the RF unit 32 into a digital signal. The baseband unit 33 removes a portion corresponding to a Cyclic Prefix (CP) from the converted digital signal, performs a Fast Fourier Transform (FFT) on the signal from which the CP has been removed, and extracts a signal in the frequency domain.

The baseband unit 33 performs Inverse Fast Fourier Transform (IFFT) on the data to generate an OFDM symbol, adds a CP to the generated OFDM symbol, generates a baseband digital signal, and converts the baseband digital signal into an analog signal. The baseband unit 33 outputs the converted analog signal to the RF unit 32.

The RF unit 32 removes an unnecessary frequency component from the analog signal input from the baseband unit 33 by using a low-pass filter, upconverts the analog signal into a signal having a carrier frequency, and transmits the signal via the antenna unit 31. The RF unit 32 may have a function of controlling transmission power. The RF unit 32 is also referred to as a transmission power control unit.

For the terminal apparatus 1, one or multiple serving cells (or component carriers, downlink component carriers, uplink component carriers) may be configured.

Each of the serving cells configured for the terminal apparatus 1 may be one of a Primary cell (PCell), a Primary SCG cell (PSCell), or a Secondary Cell (SCell).

The PCell is a serving cell included in a Master Cell Group (MCG). The PCell is a cell in which an initial connection establishment procedure or a connection re-establishment procedure is performed (has been performed) by the terminal apparatus 1.

The PSCell is a serving cell included in a Secondary Cell Group (SCG). The PSCell is a serving cell in which random access is performed by the terminal apparatus 1.

The SCell may be included in either of the MCG or the SCG.

A serving cell group (cell group) is a term at least including an MCG and an SCG. The serving cell group may include one or multiple serving cells (or component carriers). One or multiple serving cells (or component carriers) included in the serving cell group may be operated by means of carrier aggregation.

One or multiple downlink BWPs may be configured for each of the serving cells (or downlink component carriers). One or multiple uplink BWPs may be configured for each of the serving cells (or uplink component carriers).

Among one or multiple downlink BWPs configured for the serving cell (or the downlink component carrier), one downlink BWP may be configured as an active downlink BWP (or one downlink BWP may be activated). Among one or multiple uplink BWPs configured for the serving cell (or the uplink component carrier), one uplink BWP may be configured as an active uplink BWP (or one uplink BWP may be activated).

The PDSCH, the PDCCH, and the CSI-RS may be received in the active downlink BWP. The terminal apparatus 1 may attempt to receive the PDSCH, the PDCCH, and the CSI-RS in the active downlink BWP. The PUCCH and the PUSCH may be transmitted in the active uplink BWP. The terminal apparatus 1 may transmit the PUCCH and the PUSCH in the active uplink BWP. The active downlink BWP and the active uplink BWP are also collectively referred to as an active BWP.

The PDSCH, the PDCCH, and the CSI-RS need not be received in downlink BWPs (inactive downlink BWPs) other than the active downlink BWP. The terminal apparatus 1 need not attempt to receive the PDSCH, the PDCCH, and the CSI-RS in downlink BWPs that are not the active downlink BWP. The PUCCH and the PUSCH need not be transmitted in uplink BWPs (inactive uplink BWPs) that are not the active uplink BWP. The terminal apparatus 1 need not transmit the PUCCH and the PUSCH in uplink BWPs that are not the active uplink BWP. The inactive downlink BWP and the inactive uplink BWP are also collectively referred to as an inactive BWP.

Downlink BWP switch is a procedure for deactivating one active downlink BWP of a certain serving cell and activating any one of the inactive downlink BWPs of the certain serving cell. The downlink BWP switch may be controlled by a BWP field included in downlink control information. The downlink BWP switch may be controlled based on a higher layer parameter.

Uplink BWP switch is used for deactivating one active uplink BWP and activating any one of the inactive uplink BWPs that are not the one active uplink BWP. The uplink BWP switch may be controlled by a BWP field included in downlink control information. The uplink BWP switch may be controlled based on a higher layer parameter.

Among one or multiple downlink BWPs configured for the serving cell, two or more downlink BWPs need not be configured for the active downlink BWP. For the serving cell, at certain times, one downlink BWP may be active.

Among one or multiple uplink BWPs configured for the serving cell, two or more uplink BWPs need not be configured for the active uplink BWP. For the serving cell, at certain times, one uplink BWP may be active.

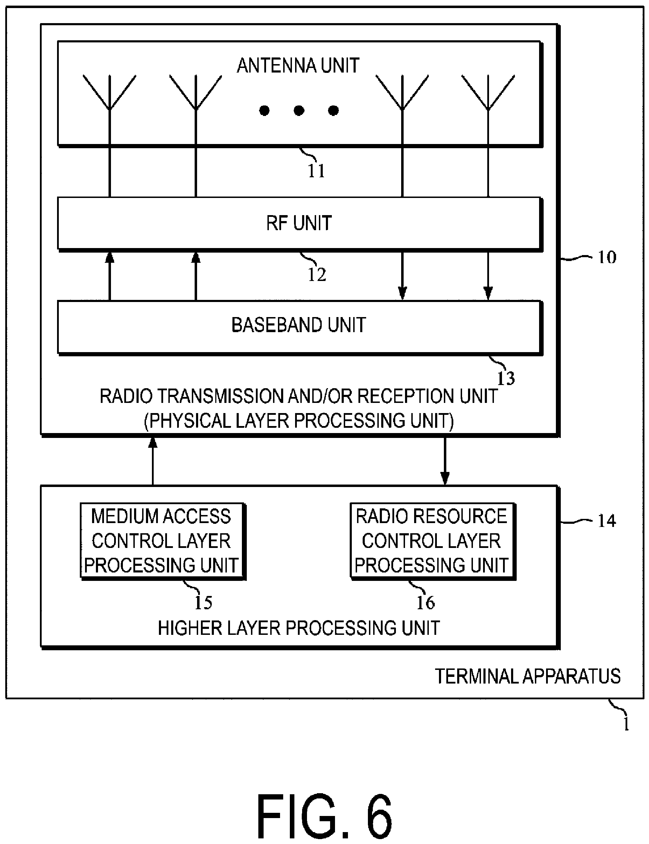

FIG. 6 is a schematic block diagram illustrating a configuration example of the terminal apparatus 1 according to an aspect of the present embodiment. As illustrated in FIG. 6, the terminal apparatus 1 includes at least one or all of a radio transmission and/or reception unit (physical layer processing unit) 10 and a higher layer processing unit 14. The radio transmission and/or reception unit 10 includes at least a part or all of an antenna unit 11, an RF unit 12, and a baseband unit 13. The higher layer processing unit 14 includes at least a part or all of a medium access control layer processing unit 15 and a radio resource control layer processing unit 16.

The radio transmission and/or reception unit 10 includes at least a part or all of a radio transmission unit 10a and a radio reception unit 10b. Here, apparatus configurations of the baseband unit 13 included in the radio transmission unit 10a and the baseband unit 13 included in the radio reception unit 10b may be the same or different from each other. Apparatus configurations of the RF unit 12 included in the radio transmission unit 10a and the RF unit 12 included in the radio reception unit 10b may be the same or different from each other. Apparatus configurations of the antenna unit 11 included in the radio transmission unit 10a and the antenna unit 11 included in the radio reception unit 10b may be the same or different from each other.

For example, the radio transmission unit 10a may generate and transmit a baseband signal of the PRACH. For example, the radio transmission unit 10a may generate and transmit a baseband signal of the PUCCH. The radio transmission unit 10a may generate and transmit a baseband signal of the PUSCH. For example, the radio transmission unit 10a may generate and transmit a baseband signal of the PUCCH DMRS. For example, the radio transmission unit 10a may generate and transmit a baseband signal of the PUSCH DMRS. For example, the radio transmission unit 10a may generate and transmit a baseband signal of the UL PTRS. For example, the radio transmission unit 10a may generate and transmit a baseband signal of the SRS. Generating the baseband signal of the SRS may be generating an SRS sequence.

For example, the radio reception unit 10b may receive and demodulate the PDSCH. For example, the radio reception unit 10b may receive and demodulate the PDCCH. For example, the radio reception unit 10b may receive and demodulate the PBCH. For example, the radio reception unit 10b may receive the synchronization signal. For example, the radio reception unit 10b may receive the PDSCH DMRS. For example, the radio reception unit 10b may receive the PDCCH DMRS. For example, the radio reception unit 10b may receive the CSI-RS. For example, the radio reception unit 10b may receive the DL PTRS.

The higher layer processing unit 14 outputs uplink data (a transport block) to the radio transmission and/or reception unit 10 (or the radio transmission unit 10a). The higher layer processing unit 14 performs processing operations of the MAC layer, a packet data convergence protocol layer, a radio link control layer, and the RRC layer.

The medium access control layer processing unit 15 included in the higher layer processing unit 14 performs processing of the MAC layer.

The radio resource control layer processing unit 16 included in the higher layer processing unit 14 performs processing of the RRC layer. The radio resource control layer processing unit 16 manages various pieces of configuration information/parameters (RRC parameters) of the terminal apparatus 1. The radio resource control layer processing unit 16 sets the RRC parameters based on an RRC message received from the base station apparatus 3.

The radio transmission and/or reception unit 10 (or the radio transmission unit 10a) performs processing such as modulation and encoding. The radio transmission and/or reception unit 10 (or the radio transmission unit 10a) generates a physical signal through modulation, encoding, and baseband signal generation (conversion into the time-continuous signal) on the uplink data and transmits the physical signal to the base station apparatus 3. The radio transmission and/or reception unit 10 (or the radio transmission unit 10a) may map the physical signal to a certain BWP (an active uplink BWP) and transmit the physical signal to the base station apparatus 3.

The radio transmission and/or reception unit 10 (or the radio reception unit 10b) performs processing such as demodulation and decoding. The radio transmission and/or reception unit 10 (or the radio reception unit 30b) may receive a physical signal in a certain BWP (active downlink BWP) of a certain serving cell. The radio transmission and/or reception unit 10 (or the radio reception unit 10b) separates, demodulates, and decodes the received physical signal and outputs the decoded information to the higher layer processing unit 14. The radio transmission and/or reception unit 10 (radio reception unit 10b) may perform the channel access procedure prior to the transmission of the physical signal.

The RF unit 12 converts (down converts) a signal received via the antenna unit 11 into a baseband signal by means of quadrature demodulation and removes unnecessary frequency components. The RF unit 12 outputs a processed analog signal to the baseband unit 13.

The baseband unit 13 converts the analog signal input from the RF unit 12 into a digital signal. The baseband unit 13 removes a portion corresponding to a Cyclic Prefix (CP) from the converted digital signal, performs a Fast Fourier Transform (FFT) on the signal from which the CP has been removed, and extracts a signal in the frequency domain.

The baseband unit 13 performs Inverse Fast Fourier Transform (IFFT) on the uplink data to generate an OFDM symbol, adds a CP to the generated OFDM symbol, generates a baseband digital signal, and converts the baseband digital signal into an analog signal. The baseband unit 13 outputs the converted analog signal to the RF unit 12.

The RF unit 12 removes unnecessary frequency components from the analog signal input from the baseband unit 13 through a low-pass filter, upconverts the analog signal into a signal having a carrier frequency, and transmits the signal via the antenna unit 11. The RF unit 12 may have a function of controlling transmission power. The RF unit 12 is also referred to as a transmit power control unit.

The physical signal (signal) will be described below.

The physical signal is a general term for a downlink physical channel, a downlink physical signal, an uplink physical channel, and an uplink physical channel. The physical channel is a general term for a downlink physical channel and an uplink physical channel. The physical signal is a general term for a downlink physical signal and an uplink physical signal.

The uplink physical channel may correspond to a set of resource elements for conveying information that is generated in a Higher layer. The uplink physical channel may be a physical channel used in the uplink component carrier. The uplink physical channel may be transmitted by the terminal apparatus 1. The uplink physical channel may be received by the base station apparatus 3. In the radio communication system according to an aspect of the present embodiment, at least a part or all of the following uplink physical channels may be used.

- Physical Uplink Control CHannel (PUCCH)
- Physical Uplink Shared CHannel (PUSCH)
- Physical Random Access CHannel (PRACH)

The PUCCH may be used to transmit Uplink Control Information (UCI). The PUCCH may be transmitted for conveying (delivering, transmitting) the uplink control information. The uplink control information may be mapped to the PUCCH. The terminal apparatus 1 may transmit the PUCCH to which the uplink control information is mapped. The base station apparatus 3 may receive the PUCCH to which the uplink control information is mapped.

The uplink control information (uplink control information bit, uplink control information sequence, uplink control information type) includes at least a part or all of Channel State Information (CSI), a Scheduling Request (SR), and Hybrid Automatic Repeat request ACKnowledgement (HARQ-ACK) information.

The channel state information is also referred to as a channel state information bit or a channel state information sequence. The scheduling request is also referred to as a scheduling request bit or a scheduling request sequence. The HARQ-ACK information is also referred to as a HARQ-ACK information bit or a HARQ-ACK information sequence.

The HARQ-ACK information may include at least a HARQ-ACK bit corresponding to a Transport block (TB). The HARQ-ACK may indicate an acknowledgement (ACK) or a negative-acknowledgement (NACK) corresponding to the transport block. The ACK may indicate that decoding of the transport block has been decoded successfully. The NACK may indicate that decoding of the transport block has not been decoded successfully. The HARQ-ACK information may include a HARQ-ACK codebook including one or multiple HARQ-ACK bits.

The transport block is a sequence of information bits delivered from a higher layer. Here, the sequence of information bits is also referred to as a bit sequence. Here, the transport block may be delivered through an UpLink - Shared CHannel (UL-SCH) of a Transport layer.

A HARQ-ACK for the transport block may be referred to as a HARQ-ACK for the PDSCH. The "HARQ-ACK for the PDSCH" indicates the HARQ-ACK for the transport block included in the PDSCH.

The HARQ-ACK may indicate an ACK or a NACK corresponding to one Code Block Group (CBG) included in the transport block.

The scheduling request may be at least used for requesting a resource of the UL-SCH for new transmission. The scheduling request bit may be used for indicating either of a positive SR or a negative SR. The scheduling request bit indicating the positive SR is also referred to as "the positive SR being conveyed". The positive SR may indicate that the terminal apparatus 1 requests resources of the UL-SCH for initial transmission. The positive SR may indicate that a scheduling request is triggered by a higher layer. The positive SR may be conveyed in a case that the higher layer indicates the scheduling request. The scheduling request bit indicating the negative SR is also referred to as "the negative SR being transmitted". The negative SR may indicate that the terminal apparatus 1 requests no resources of the UL-SCH for initial transmission. The negative SR may indicate that the scheduling request is not triggered by the higher layer. The negative SR may be conveyed in a case that the higher layer indicates no scheduling request.

Channel state information may include at least a part or all of a Channel Quality Indicator (CQI), a Precoder Matrix Indicator (PMI), and a Rank Indicator (RI). The CQI is an indicator related to quality (for example, propagation strength) of a propagation path or quality of a physical channel, and the PMI is an indicator related to a precoder. The RI is an indicator related to a transmission rank (or the number of transmission layers).

The channel state information is an indicator related to a reception state of a physical signal (for example, CSI-RS) at least used for channel measurement. The channel state information may be determined by the terminal apparatus 1 based on the reception state assumed by the physical signal at least used for channel measurement. Channel measurement may include interference measurement.

The PUCCH may correspond to a PUCCH format. The PUCCH may be a set of resource elements used for conveying the PUCCH format. The PUCCH may include the PUCCH format. The PUCCH format may be transmitted with a certain PUCCH format. Note that the PUCCH format may be interpreted as a form of information. The PUCCH format may be interpreted as a set of information set to a certain form of information.

The PUSCH may be used for conveying one or both of the transport block and the uplink control information. The transport block may be mapped to the PUSCH. The transport block delivered by the UL-SCH may be mapped to the PUSCH. The uplink control information may be mapped to the PUSCH. The terminal apparatus 1 may transmit the PUSCH to which one or both of the transport block and the uplink control information are mapped. The base station apparatus 3 may receive the PUSCH to which one or both of the transport block and the uplink control information are mapped.

The PRACH may be transmitted for conveying a random access preamble. The terminal apparatus 1 may transmit the PRACH. The base station apparatus 3 may receive the PRACH. A PRACH sequence $x_{u, v}(n)$ is defined by $x_{u, v}(n) = x_u(\mathrm{mod}(n + C_v, L_{RA}))$. Here, $x_u$ is a Zadoff Chu (ZC) sequence. $x_u$ may be defined by $x_u = \exp(-j\pi ui(i + 1) / L_{RA})$. j is an imaginary unit. $\pi$ is the ratio of the circumference of a circle to its diameter. $C_v$ corresponds to a cyclic shift of the PRACH sequence. $L_{RA}$ corresponds to the length of the PRACH sequence. $L_{RA}$ is 839, or 139. i is an integer in the range from 0 to $L_{RA} - 1$. u is a sequence index for the PRACH sequence.

For each PRACH occasion, 64 random access preambles are defined. The random access preambles are identified based on the cyclic shift $C_v$ of the PRACH sequence and the sequence index u for the PRACH sequence. Each of the 64 identified random access preambles may be assigned an index.

The uplink physical signal may correspond to a set of resource elements. The uplink physical signal need not be used to convey information generated in a higher layer. Note that the uplink physical signal may be used to convey information generated in a physical layer. The uplink physical signal may be a physical signal used in the uplink component carrier. The terminal apparatus 1 may transmit the uplink physical signal. The base station apparatus 3 may receive the uplink physical signal. In the radio communication system according to an aspect of the present embodiment, at least a part or all of the following uplink physical signals may be used.

- UpLink Demodulation Reference Signal (UL DMRS)
- Sounding Reference Signal (SRS)
- UpLink Phase Tracking Reference Signal (UL PTRS)

The UL DMRS is a general term for a DMRS for the PUSCH and a DMRS for the PUCCH.

A set of antenna ports of the DMRS for the PUSCH (DMRS related to the PUSCH, DMRS included in the PUSCH, DMRS corresponding to the PUSCH) may be given based on a set of antenna ports for the PUSCH. For example, the set of antenna ports of the DMRS for the PUSCH may be the same as a set of antenna ports of the PUSCH.

Transmission of the PUSCH and transmission of the DMRS for the PUSCH may be indicated (or may be scheduled) by one DCI format. The PUSCH and the DMRS for the PUSCH may be collectively referred to as a PUSCH. Transmission of the PUSCH may mean transmission of the PUSCH and the DMRS for the PUSCH.

A propagation path of the PUSCH may be inferred from the DMRS for the PUSCH.

A set of antenna ports of the DMRS for the PUCCH (DMRS related to the PUCCH, DMRS included in the PUCCH, DMRS corresponding to the PUCCH) may be the same as a set of antenna ports of the PUCCH.

Transmission of the PUCCH and transmission of the DMRS for the PUCCH may be indicated (or may be triggered) by one DCI format. One or both of resource element mapping of the PUCCH and resource element mapping of the DMRS for the PUCCH may be given by one PUCCH format. The PUCCH and the DMRS for the PUCCH may be collectively referred to as a PUCCH. Transmission of the PUCCH may mean transmission of the PUCCH and the DMRS for the PUCCH.

A propagation path of the PUCCH may be inferred from the DMRS for the PUCCH.

The downlink physical channel may correspond to a set of resource elements for conveying information generated in a higher layer. The downlink physical channel may be a physical channel used in a downlink component carrier. The base station apparatus 3 may transmit the downlink physical channel. The terminal apparatus 1 may receive the downlink physical channel. In the radio communication system according to an aspect of the present embodiment, at least a part or all of the following downlink physical channels may be used.

- Physical Broadcast Channel (PBCH)
- Physical Downlink Control Channel (PDCCH)
- Physical Downlink Shared Channel (PDSCH)

The PBCH may be transmitted for conveying one or both of a Master Information Block (MIB) and physical layer control information. Here, the physical layer control information is information generated in the physical layer. The MIB is a set of parameters mapped to a Broadcast Control CHannel (BCCH) that is a logical channel of the MAC layer. The BCCH is mapped to the BCH that is a channel of the transport layer. The BCH may be mapped to the PBCH. The terminal apparatus 1 may receive the PBCH to which one or both of the MIB and the physical layer control information are mapped. The base station apparatus 3 may transmit the PBCH to which one or both of the MIB and/or the physical layer control information are mapped.

For example, the physical layer control information may include 8 bits. The physical layer control information may include at least a part or all of the following 0A to 0D.

    0A) Radio frame bit
    0B) Half radio frame (half system frame, half frame) bit
    0C) SS/PBCH block index bit
    0D) Subcarrier offset bit

The radio frame bit is used for indicating a radio frame in which the PBCH is transmitted (radio frame including a slot in which the PBCH is transmitted). The radio frame bit includes 4 bits. The radio frame bit may include 4 bits out of a 10-bit radio frame indicator. For example, the radio frame indicator may be at least used for identifying radio frames from index 0 to index 1023.

The half radio frame bit is used for indicating, out of the radio frame in which the PBCH is transmitted, which of the first five subframes or the last five subframes is used for transmission of the PBCH. Here, the half radio frame may include five subframes. The half radio frame may include the first five subframes out of the 10 subframes included in the radio frame. The half radio frame may include the last five subframes out of the 10 subframes included in the radio frame.

The SS/PBCH block index bit is used for indicating an SS/PBCH block index. The SS/PBCH block index bit includes 3 bits. The SS/PBCH block index bit may include 3 bits out of a 6-bit SS/PBCH block index indicator. The SS/PBCH block index indicator may be at least used for identifying SS/PBCH blocks from index 0 to index 63.

The subcarrier offset bit is used for indicating a subcarrier offset. The subcarrier offset may be used for indicating a difference between the first subcarrier to which the PBCH is mapped and the first subcarrier to which the control resource set having an index of 0 is mapped.

The PDCCH may be used for transmitting Downlink Control Information (DCI). The downlink control information may be mapped to the PDCCH. The terminal apparatus 1 may receive the PDCCH to which the downlink control information is mapped. The base station apparatus 3 may transmit the PDCCH to which the downlink control information is mapped.

The downlink control information may be transmitted with a DCI format. Note that the DCI format may also be interpreted to be in the format of downlink control information. The DCI format may be interpreted as a set of downlink control information set to a certain format of downlink control information.

A DCI format 0_0, a DCI format 0_1, a DCI format 1_0, and a DCI format 1_1 are DCI formats. An uplink DCI format is a general term for the DCI format 0_0 and the DCI format 0_1. A downlink DCI format is a general term for the DCI format 1_0 and the DCI format 1_1.

The DCI format 0_0 is at least used for scheduling of the PUSCH mapped to a certain cell. The DCI format 0_0 includes at least a part or all of fields listed from 1A to 1E.

    1A) Identifier field for DCI formats
    1B) Frequency domain resource assignment field
    1C) Time domain resource assignment field
    1D) Frequency hopping flag field
    1E) Modulation and Coding Scheme (MCS) field

The identifier field for DCI formats may indicate whether the DCI format including the identifier field for DCI formats is an uplink DCI format or a downlink DCI format. In other words, each of the uplink DCI format and the downlink DCI format may include the identifier field for DCI formats. Here, the identifier field for DCI formats included in the DCI format 0_0 may indicate 0.

A frequency domain resource assignment field included in the DCI format 0_0 may be used for indicating assignment of frequency resources for the PUSCH.

A time domain resource assignment field included in the DCI format 0_0 may be used for indicating assignment of time resources for the PUSCH.

A frequency hopping flag field may be used for indicating whether frequency hopping is applied to the PUSCH.

An MCS field included in the DCI format 0_0 may be at least used for indicating one or both of a modulation scheme for the PUSCH and a target encoding rate. The target encoding rate may be a target encoding rate for the transport block mapped to the PUSCH. The Transport Block Size (TBS) of the PUSCH mapped to the PUSCH may be determined based on one or both of the target encoding rate and the modulation scheme for the PUSCH.

The DCI format 0_0 need not include a field used for a CSI request.

The DCI format 0_0 need not include a carrier indicator field. In other words, for the uplink component carrier to which the PUSCH scheduled by the DCI format 0_0 is mapped, the serving cell to which this uplink component carrier belongs may be the same as the serving cell of the uplink component carrier to which the PDCCH including the DCI format 0_0 is mapped. Based on detection of the DCI format 0_0 in a certain downlink component carrier of a certain serving cell, the terminal apparatus 1 may recognize that the PUSCH scheduled by the DCI format 0_0 is mapped to the uplink component carrier of the certain serving cell.

The DCI format 0_0 need not include the BWP field. Here, the DCI format 0_0 may be a DCI format for scheduling the PUSCH without changing the active uplink BWP. The terminal apparatus 1 may recognize that the PUSCH is transmitted without switching the active uplink BWP based on detection of the DCI format 0_0 used for the scheduling of the PUSCH.

The DCI format 0_1 is at least used for scheduling of the PUSCH of a certain cell (mapped to a certain cell). The DCI format 0_1 includes at least a part or all of fields listed from 2A to 2H.

    2A) Identifier field for DCI formats
    2B) Frequency domain resource assignment field
    2C) Uplink time domain resource assignment field
    2D) Frequency hopping flag field
    2E) MCS field
    2F) CSI request field
    2G) BWP field
    2H) Carrier indicator field

The identifier field for DCI formats included in the DCI format 0_1 may indicate 0.

The frequency domain resource assignment field included in the DCI format 0_1 may be used for indicating assignment of frequency resources for the PUSCH.

The time domain resource assignment field included in the DCI format 0_1 may be used for indicating assignment of time resources for the PUSCH.

The MCS field included in the DCI format 0_1 may be at least used for indicating a part or all of a modulation scheme for the PUSCH and/or a target encoding rate.

The BWP field of the DCI format 0_1 may be used for indicating an uplink BWP to which the PUSCH scheduled by the DCI format 0_1 is mapped. In other words, the DCI format 0_1 may be accompanied by a change in the active uplink BWP. The terminal apparatus 1 may recognize the uplink BWP to which the PUSCH is mapped based on detection of the DCI format 0_1 used for scheduling of the PUSCH.

The DCI format 0_1 not including the BWP field may be a DCI format for scheduling the PUSCH without changing the active uplink BWP. The terminal apparatus 1 may recognize that the PUSCH is transmitted without switching the active uplink BWP based on detection of the DCI format D0_1 which is the DCI format 0_1 used for the scheduling of the PUSCH and does not include the BWP field.

In a case that the BWP field is included in the DCI format 0_1 but the terminal apparatus 1 does not support the function of switching the BWP according to the DCI format 0_1, the terminal apparatus 1 may ignore the BWP field. In other words, the terminal apparatus 1 which does not support the function of switching the BWP may recognize that the PUSCH is transmitted without switching the active uplink BWP based on detection of the DCI format 0_1 which is the DCI format 0_1 used for the scheduling of the PUSCH and includes the BWP field. Here, in a case of supporting the function of switching the BWP, the terminal apparatus 1 may report, in a function information reporting procedure of the RRC layer, that "the terminal apparatus 1 supports the function of switching the BWP".

The CSI request field is used for indicating the report of the CSI.

In a case that the carrier indicator field is included in the DCI format 0_1, the carrier indicator field may be used for indicating the uplink component carrier to which the PUSCH is mapped. In a case that the carrier indicator field is not included in the DCI format 0_1, the uplink component carrier to which the PUSCH is mapped may be the same as the uplink component carrier to which the PDCCH including the DCI format 0_1 used for scheduling of the PUSCH is mapped. In a case that the number of uplink component carriers configured for the terminal apparatus 1 in a certain serving cell group is two or more (case that uplink carrier aggregation is operated in a certain serving cell group), the number of bits of the carrier indicator field included in the DCI format 0_1 used for scheduling of the PUSCH mapped to the certain serving cell group may be 1 bit or more (for example, 3 bits). In a case that the number of uplink component carriers configured for the terminal apparatus 1 in a certain serving cell group is one (case that uplink carrier aggregation is not operated in a certain serving cell group), the number of bits of the carrier indicator field included in the DCI format 0_1 used for scheduling of the PUSCH mapped to the certain serving cell group may be 0 bits (or the carrier indicator field need not be included in the DCI format 0_1 used for scheduling of the PUSCH mapped to the certain serving cell group).

The DCI format 1_0 is at least used for scheduling of the PDSCH mapped to a certain cell. The DCI format 1_0 includes at least a part or all of 3A to 3F.

3A) Identifier field for DCI formats
3B) Frequency domain resource assignment field
3C) Time domain resource assignment field
3D) MCS field
3E) PDSCH_HARQ feedback timing indicator field (PDSCH to HARQ feedback timing indicator field)
3F) PUCCH resource indicator field

The identifier field for DCI formats included in the DCI format 1_0 may indicate 1.

The frequency domain resource assignment field included in the DCI format 1_0 may be at least used for indicating assignment of frequency resources for the PDSCH.

The time domain resource assignment field included in the DCI format 1_0 may be at least used for indicating assignment of time resources for the PDSCH.

The MCS field included in the DCI format 1_0 may be at least used for indicating one or both of the modulation scheme for the PDSCH and the target encoding rate. The target encoding rate may be a target encoding rate for the transport block mapped to the PDSCH. The Transport Block Size (TBS) of the PDSCH mapped to the PDSCH may be determined based on one or both of the target encoding rate and the modulation scheme for the PDSCH.

The PDSCH_HARQ feedback timing indicator field may be used for indicating an offset from the slot including the last OFDM symbol of the PDSCH to the slot including the first OFDM symbol of the PUCCH.

The PUCCH resource indicator field may be a field indicating an index of any of one or multiple PUCCH resources included in a PUCCH resource set. The PUCCH resource set may include one or multiple PUCCH resources.

The DCI format 1_0 need not include the carrier indicator field. In other words, the downlink component carrier to which the PDSCH scheduled by using a DCI format 1_0 is mapped may be the same as the downlink component carrier to which the PDCCH including the DCI format 1_0 is mapped. Based on detection of the DCI format 1_0 in a certain downlink component carrier, the terminal apparatus 1 may recognize that the PDSCH scheduled by the DCI format 1_0 is mapped to the downlink component carrier.

The DCI format 1_0 need not include the BWP field. Here, DCI format 1_0 may be a DCI format for scheduling the PDSCH without changing the active downlink BWP. The terminal apparatus 1 may recognize that the PDSCH is received without switching the active downlink BWP based on detection of the DCI format 1_0 used in the scheduling of the PDSCH.

The DCI format 1_1 is at least used for scheduling of the PDSCH mapped to a certain cell. The DCI format 1_1 includes at least a part or all of 4A to 4I.

4A) Identifier field for DCI formats
4B) Frequency domain resource assignment field
4C) Time domain resource assignment field
4E) MCS field
4F) PDSCH_HARQ feedback timing indicator field
4G) PUCCH resource indicator field
4H) BWP field
4I) Carrier indicator field

The identifier field for DCI formats included in the DCI format 1_1 may indicate 1.

The frequency domain resource assignment field included in the DCI format 1_1 may be at least used for indicating assignment of frequency resources for the PDSCH.

The time domain resource assignment field included in the DCI format 1_1 may be at least used for indicating assignment of time resources for the PDSCH.

The MCS field included in the DCI format 1_1 may be at least used for indicating one or both of the modulation scheme for the PDSCH and the target encoding rate.

In a case that the PDSCH_HARQ feedback timing indicator field is included in the DCI format 1_1, the PDSCH_HARQ feedback timing indicator field may be at least used for indicating an offset from the slot including the last OFDM symbol of the PDSCH to the slot including the first OFDM symbol of the PUCCH. In a case that the PDSCH_HARQ feedback timing indicator field is not included in the DCI format 1_1, an offset from the slot including the last OFDM symbol of the PDSCH to the slot including the first OFDM symbol of the PUCCH may be identified by a higher layer parameter.

The PUCCH resource indicator field may be a field indicating an index of any of one or multiple PUCCH resources included in a PUCCH resource set.

The BWP field of the DCI format 1_1 may be used to indicate the downlink BWP to which the PDSCH scheduled by the DCI format 1_1 is mapped. In other words, the DCI format 1_1 may be accompanied by a change in the active downlink BWP. The terminal apparatus 1 may recognize the downlink BWP to which the PUSCH is mapped based on detection of the DCI format 1_1 used for the scheduling of the PDSCH.

The DCI format 1_1 not including the BWP field may be a DCI format for scheduling the PDSCH without changing the active downlink BWP. The terminal apparatus 1 may recognize that the PDSCH is received without switching the active downlink BWP based on detection of the DCI format 1_1 which is used for the scheduling of the PDSCH and does not include the BWP field.

In a case that the DCI format 1_1 includes the BWP field but the terminal apparatus 1 does not support the function of switching the BWP according to the DCI format 1_1, the terminal apparatus 1 may ignore the BWP field. In other words, the terminal apparatus 1 which does not support the function of switching the BWP may recognize that the PDSCH is received without switching the active downlink BWP based on detection of the DCI format 1_1 which is used for the scheduling of the PDSCH and includes the BWP field. Here, in a case of supporting the function of switching the BWP, the terminal apparatus 1 may report, in a function information reporting procedure of the RRC layer, that "the terminal apparatus 1 supports the function of switching the BWP".

In a case that the carrier indicator field is included in the DCI format 1_1, the carrier indicator field may be used for indicating the downlink component carrier to which the PDSCH is mapped. In a case that the carrier indicator field is not included in the DCI format 1_1, the downlink component carrier to which the PDSCH is mapped may be the same as the downlink component carrier to which the PDCCH including the DCI format 1_1 used for scheduling of the PDSCH is mapped. In a case that the number of downlink component carriers configured for the terminal apparatus 1 in a certain serving cell group is two or more (case that downlink carrier aggregation is operated in a certain serving cell group), the number of bits of the carrier indicator field included in the DCI format 1_1 used for scheduling of the PDSCH mapped to the certain serving cell group may be 1 bit or more (for example, 3 bits). In a case that the number of downlink component carriers configured for the terminal apparatus 1 in a certain serving cell group is one (case that downlink carrier aggregation is not operated in a certain serving cell group), the number of bits of the carrier indicator field included in the DCI format 1_1 used for scheduling of the PDSCH mapped to the certain serving cell group may be 0 bits (or the carrier indicator field need not be included in the DCI format 1_1 used for scheduling of the PDSCH mapped to the certain serving cell group).

The PDSCH may be used for conveying the transport block. The PDSCH may be used for transmitting the transport block delivered by the DL-SCH. The PDSCH may be used for conveying the transport block. The transport block may be mapped to the PDSCH. The transport block corresponding to the DL-SCH may be mapped to the PDSCH. The base station apparatus 3 may transmit the PDSCH. The terminal apparatus 1 may receive the PDSCH.

The downlink physical signal may correspond to a set of resource elements. The downlink physical signal need not carry information generated in a higher layer. The downlink physical signal may be a physical signal used in the downlink component carrier. The downlink physical signal may be transmitted by the base station apparatus 3. The downlink physical signal may be transmitted by the terminal apparatus 1. In the radio communication system according to an aspect of the present embodiment, at least a part or all of the following downlink physical signals may be used.

- Synchronization signal (SS)
- DownLink DeModulation Reference Signal (DL DMRS)
- Channel State Information-Reference Signal (CSI-RS)
- DownLink Phase Tracking Reference Signal (DL PTRS)

The synchronization signal may be used for the terminal apparatus 1 to take synchronization in one or both of the frequency domain and the time domain in the downlink. The synchronization signal is a general term for the Primary Synchronization Signal (PSS) and the Secondary Synchronization Signal (SSS).

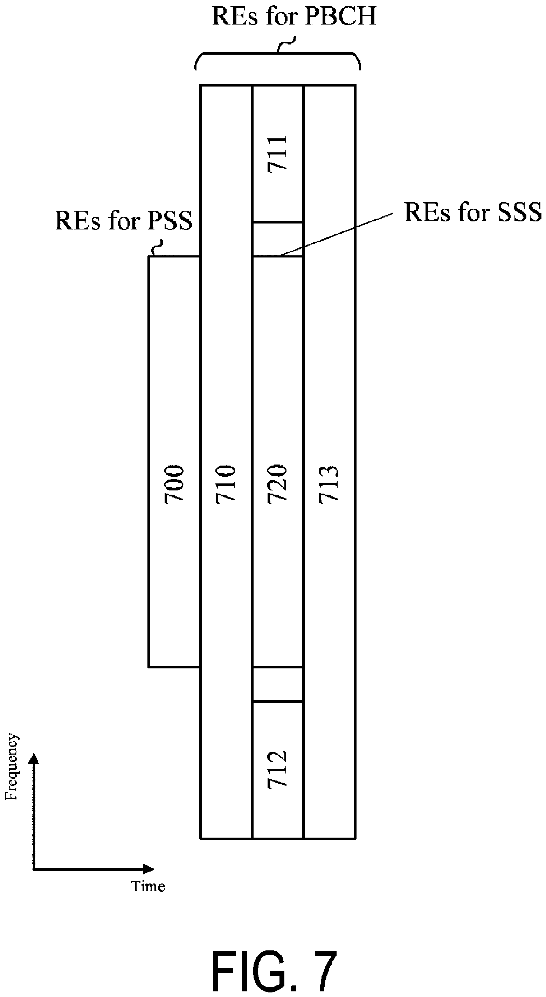

FIG. 7 is a diagram illustrating a configuration example of the SS/PBCH block according to an aspect of the present embodiment. In FIG. 7, the horizontal axis corresponds to a time axis (OFDM symbol index $l_{sym}$), and the vertical axis represents the frequency domain. A block 700 represents a set of resource elements for the PSS. A block 720 represents a set of resource elements for the SSS. Four blocks (blocks 710, 711, 712, and 713) represent a set of resource elements for the PBCH and the DMRS for the PBCH (DMRS related to the PBCH, DMRS included in the PBCH, DMRS corresponding to the PBCH).

As illustrated in FIG. 7, the SS/PBCH block includes the PSS, the SSS, and the PBCH. The SS/PBCH block includes four consecutive OFDM symbols. The SS/PBCH block includes 240 subcarriers. The PSS is mapped to the 57th to 183rd subcarriers in the first OFDM symbol. The SSS is mapped to the 57th to 183rd subcarriers in the third OFDM symbol. Zero may be set to the 1st to 56th subcarriers of the first OFDM symbol. Zero may be set to the 184th to 240th subcarriers of the first OFDM symbol. Zero may be set to the 49th to 56th subcarriers of the third OFDM symbol. Zero may be set to the 184th to 192nd subcarriers of the third OFDM symbol. The PBCH is mapped to subcarriers which are the 1st to 240th subcarriers of the second OFDM symbol and to which the DMRS for the PBCH is not mapped. The PBCH is mapped to subcarriers which are the 1st to 48th subcarriers of the third OFDM symbol and to which the DMRS for the PBCH is not mapped. The PBCH is mapped to subcarriers which are the 193rd to 240th subcarriers of the third OFDM symbol and to which the DMRS for the PBCH is not mapped. The PBCH is mapped to subcarriers which are the 1st to 240th subcarriers of the fourth OFDM symbol and to which the DMRS for the PBCH is not mapped.

The PSS, the SSS, the PBCH, and the antenna port of the DMRS for the PBCH may be the same.

The PBCH over which the symbol of the PBCH on a certain antenna port is conveyed may be inferred from the DMRS for the PBCH mapped to the slot to which the PBCH is mapped and for the PBCH included in the SS/PBCH block including the PBCH.

The DL DMRS is a general term for a DMRS for the PBCH, a DMRS for the PDSCH, and a DMRS for the PDCCH.

A set of antenna ports of the DMRS for the PDSCH (DMRS related to the PDSCH, DMRS included in the PDSCH, DMRS corresponding to the PDSCH) may be given based on a set of antenna ports for the PDSCH. In other words, the set of antenna ports of the DMRS for the PDSCH may be the same as the set of antenna ports for the PDSCH.

Transmission of the PDSCH and transmission of the DMRS for the PDSCH may be indicated (or may be scheduled) by one DCI format. The PDSCH and the DMRS for the PDSCH may be collectively referred to as a PDSCH. Transmission of the PDSCH may be transmission of the PDSCH and the DMRS for the PDSCH.

A propagation path of the PDSCH may be inferred from the DMRS for the PDSCH. In a case that a set of resource elements in which the symbol of a certain PDSCH is conveyed and a set of resource elements in which the symbol of the DMRS for the certain PDSCH is conveyed are included in the same Precoding Resource Group (PRG), the PDSCH over which the symbol of the PDSCH on a certain antenna port is conveyed may be inferred from the DMRS for the PDSCH.

The antenna port of the DMRS for the PDCCH (DMRS related to the PDCCH, DMRS included in the PDCCH, DMRS corresponding to the PDCCH) may be the same as the antenna port for the PDCCH.

The PDCCH may be inferred from the DMRS for the PDCCH. In other words, a propagation path of the PDCCH may be inferred from the DMRS for the PDCCH. In a case that the same precoder is (assumed to be) applied to a set of resource elements in which the symbol of a certain PDCCH is conveyed and a set of resource elements in which the symbol of the DMRS for the certain PDCCH is conveyed, the PDCCH over which the symbol of the PDCCH on a certain antenna port is conveyed may be inferred from the DMRS for the PDCCH.

A Broadcast CHannel (BCH), an Uplink-Shared CHannel (UL-SCH), and a Downlink-Shared CHannel (DL-SCH) are transport channels. A transport channel defines the relationship between a physical layer channel and a MAC layer channel (also referred to as a logical channel).

The BCH of the transport layer is mapped to the PBCH of the physical layer. In other words, a transport block passing through the BCH of the transport layer is delivered to the PBCH of the physical layer. The UL-SCH of the transport layer is mapped to the PUSCH of the physical layer. In other words, the transport block passing through the UL-SCH of the transport layer is delivered to the PUSCH of the physical layer. The DL-SCH of the transport layer is mapped to the PDSCH of the physical layer. In other words, a transport block passing through the DL-SCH of the transport layer is delivered to the PDSCH of the physical layer.

For each serving cell, one UL-SCH and one DL-SCH may be given. The BCH may be given to the PCell. The BCH need not be given to the PSCell and the SCell.

The MAC layer controls the Hybrid Automatic Repeat reQuest (HARQ) for each transport block.

A Broadcast Control CHannel (BCCH), a Common Control CHannel (CCCH), and a Dedicated Control CHannel (DCCH) are logical channels. For example, the BCCH is a channel of the RRC layer used for transmitting the MIB or system information. The Common Control CHannel (CCCH) may be used for transmitting a common RRC message in multiple terminal apparatuses 1. Here, the CCCH may be, for example, used for the terminal apparatus 1 that is not in a state of RRC connection. The Dedicated Control CHannel (DCCH) may be at least used for transmitting an RRC message dedicated to the terminal apparatus 1. Here, the DCCH may be, for example, used for the terminal apparatus 1 that is in a state of RRC connection.

The higher layer parameter common to the multiple terminal apparatuses 1 is also referred to as a common higher layer parameter. Here, the common higher layer parameter may be defined as a parameter specific to the serving cell. Here, the parameter specific to the serving cell may be a parameter common to terminal apparatuses configured with the serving cell (for example, the terminal apparatuses 1-A, 1-B, and 1-C).

For example, an RRC message delivered to the BCCH may include the common higher layer parameter. For example, an RRC message delivered on the DCCH may include the common higher layer parameter.

Among certain higher layer parameters, a higher layer parameter different from the common higher layer parameter is also referred to as a dedicated higher layer parameter. Here, the dedicated higher layer parameter may provide a dedicated RRC parameter to the terminal apparatus 1-A configured with the serving cell. In other words, the dedicated RRC parameter is a higher layer parameter capable of providing a unique configuration to each of the terminal apparatuses 1-A, 1-B, and 1-C.

The BCCH of the logical channel may be mapped to the BCH or the DL-SCH of the transport layer. For example, a transport block including the information of the MIB is delivered to the BCH of the transport layer. A transport block including system information other than the MIB is delivered to the DL-SCH of the transport layer. The CCCH is mapped to the DL-SCH or the UL-SCH. In other words, a transport block mapped to the CCCH is delivered to the DL-SCH or the UL-SCH. The DCCH is mapped to the DL-SCH or the UL-SCH. In other words, a transport block mapped to the DCCH is delivered to the DL-SCH or the UL-SCH.

The RRC message includes one or multiple parameters managed in the RRC layer. Here, the parameters managed in the RRC layer are also referred to as RRC parameters. For example, the RRC message may include the MIB. The RRC message may include the system information. The RRC message may include a message corresponding to the CCCH. The RRC message may include a message corresponding to the DCCH. The RRC message including a message corresponding to the DCCH is also referred to as a dedicated RRC message.

The higher layer parameter is an RRC parameter or a parameter included in a Medium Access Control Control Element (MAC CE). In other words, the higher layer parameter is a general term for the MIB, the system information, a message corresponding to the CCCH, a message corresponding to the DCCH, and parameters included in the MAC CE. The parameters included in the MAC CE are transmitted by a MAC Control Element (CE) command.

Procedures performed by the terminal apparatus 1 include at least a part or all of the following 5A to 5C.

5A) Cell search
5B) Random access
5C) Data communication

The cell search is a procedure used for the terminal apparatus 1 synchronizing with a certain cell related to the time domain and the frequency domain and detecting a physical cell identity (physical cell ID). In other words, by means of the cell search, the terminal apparatus 1 may perform synchronization with a certain cell in the time domain and the frequency domain and detect a physical cell ID.

A sequence of the PSS is given based at least on the physical cell ID. A sequence of the SSS is given based at least on the physical cell ID.

An SS/PBCH block candidate indicates a resource allowed to (possible to, scheduled to, configured to, defined to, having a possibility to) transmit the SS/PBCH block.

A set of SS/PBCH block candidates in a certain half radio frame is also referred to as an SS burst set. The SS burst set is also referred to as a transmission window (transmissionwindow), an SS transmission window, or a Discovery Reference Signal transmission window (DRS transmission window). The SS burst set is a general term including at least a first SS burst set and a second SS burst set.

The base station apparatus 3 transmits SS/PBCH blocks with one or multiple indices in a prescribed periodicity. The terminal apparatus 1 may detect at least one SS/PBCH block out of the SS/PBCH blocks with one or multiple indices and attempt decoding of the PBCH included in the at least one SS/PBCH block.

The random access is a procedure including at least a part or all of a message 1, a message 2, a message 3, and a message 4.

The message 1 is a procedure in which the PRACH is transmitted by the terminal apparatus 1. The terminal apparatus 1 transmits the PRACH in one PRACH occasion selected out of one or multiple PRACH occasions based at least on the index of the SS/PBCH block candidate detected based on the cell search. Each of the PRACH occasions is defined based at least on resources in the time domain and the frequency domain.

The terminal apparatus 1 transmits one random access preamble selected out of the PRACH occasions corresponding to the indices of the SS/PBCH block candidates in which the SS/PBCH block is detected.

The message 2 is a procedure for attempting to detect a DCI format 1_0 with a Cyclic Redundancy Check (CRC) scrambled by a Random Access - Radio Network Temporary Identifier (RA-RNTI) by the terminal apparatus 1. The terminal apparatus 1 attempts detection of the PDCCH including the DCI format in a control resource set given based on the MIB, which is included in the PBCH included in the SS/PBCH block detected based on cell search, and in resources indicated based on a configuration of a search space set. The message 2 is also referred to as a random access response.

The message 3 is a procedure for transmitting the PUSCH scheduled by using a random access response grant included in a DCI format 1_0 detected through the procedure of the message 2. Here, the random access response grant (random access responsegrant) is indicated by the MAC CE included in the PDSCH scheduled by using the DCI format 1_0.

The PUSCH scheduled based on the random access response grant is either a message 3 PUSCH or a PUSCH. The message 3 PUSCH includes a contention resolution identifier (contention resolution ID) MAC CE. The contention resolution ID MAC CE includes a contention resolution ID.

Retransmission of the message 3 PUSCH is scheduled by using a DCI format 0_0 with a CRC scrambled based on a Temporary Cell - Radio Network Temporary Identifier (TC-RNTI).

The message 4 is a procedure for attempting to detect a DCI format 1_0 with a CRC scrambled based on either of a Cell - Radio Network Temporary Identifier (C-RNTI) or a TC-RNTI. The terminal apparatus 1 receives a PDSCH scheduled based on the DCI format 1_0. The PDSCH may include a contention resolution ID.

Data communication is a general term for downlink communication and uplink communication.

In the data communication, the terminal apparatus 1 attempts detection of the PDCCH (monitors the PDCCH, supervises the PDCCH) in a control resource set and resources identified based on a search space set.

The control resource set is a set of resources including a certain number of resource blocks and a certain number of OFDM symbols. In the frequency domain, the control resource set may include continuous resources (non-interleaved mapping) or may include distributed resources (interleaver mapping).

A set of resource blocks constituting the control resource set may be indicated by the higher layer parameter. The number of OFDM symbols constituting the control resource set may be indicated by the higher layer parameter.

The terminal apparatus 1 attempts detection of the PDCCH in a search space set. Here, an attempt to detect the PDCCH in the search space set may be an attempt to detect a candidate of the PDCCH in the search space set, may be an attempt to detect a DCI format in the search space set, may be an attempt to detect the PDCCH in the control resource set, may be an attempt to detect a candidate of the PDCCH in the control resource set, or may be an attempt to detect a DCI format in the control resource set.

The search space set is defined as a set of candidates of the PDCCH. The search space set may be a Common Search Space (CSS) set or may be a UE-specific Search Space (USS) set. The terminal apparatus 1 attempts detection of candidates of the PDCCH in a part or all of a Type 0 PDCCH common search space set, a Type 0a PDCCH common search space set, a Type 1 PDCCH common search space set, a Type 2 PDCCH common search space set, a Type 3 PDCCH common search space set, and/or a UE-specific PDCCH search space set (UE-specific search space set).

The Type 0 PDCCH common search space set may be used as a common search space set having an index of 0. The Type 0 PDCCH common search space set may be a common search space set having an index of 0.

The CSS set is a general term for the Type 0 PDCCH common search space set, the Type 0a PDCCH common search space set, the Type 1 PDCCH common search space set, the Type 2 PDCCH common search space set, and the Type 3 PDCCH common search space set. The USS set is also referred to as a UE-specific PDCCH search space set.

A certain search space set is related to (included in, corresponds to) a certain control resource set. The index of the control resource set related to the search space set may be indicated by the higher layer parameter.

For a certain search space set, a part or all of 6A to 6C may be indicated by at least the higher layer parameter.

> 6A) PDCCH monitoring periodicity
> 6B) PDCCH monitoring pattern within a slot
> 6C) PDCCH monitoring offset

The monitoring occasion of a certain search space set may correspond to the OFDM symbol to which the first OFDM symbol of a control resource set related to the certain search space set is mapped. The monitoring occasion of a certain search space set may correspond to a resource of a control resource set starting from the first OFDM symbol of the control resource set related to the certain search space set. The monitoring occasion of the search space set is given based at least on a part or all of the monitoring periodicity of the PDCCH, the monitoring pattern of the PDCCH in a slot, and the monitoring offset of the PDCCH.

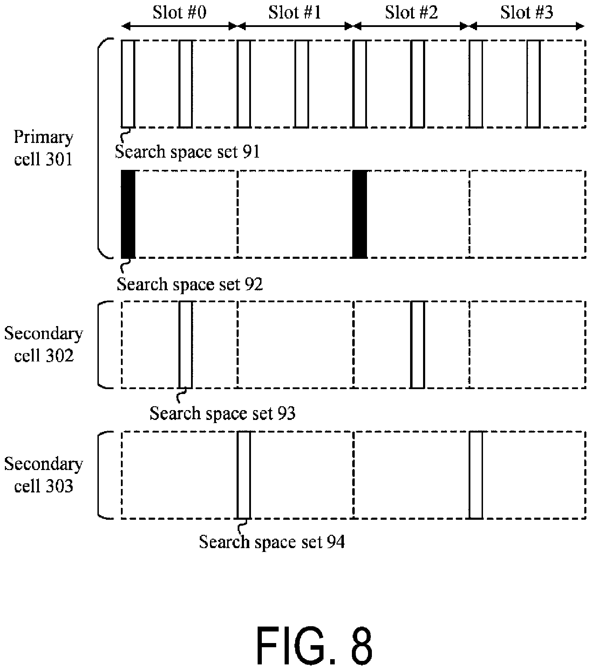

FIG. 8 is a diagram illustrating an example of the monitoring occasions for the search space sets according to an aspect of the present embodiment. In FIG. 8, a search space set 91 and a search space set 92 are configured in a primary cell 301, a search space set 93 is configured in a secondary cell 302, and a search space set 94 is configured in a secondary cell 303.

In FIG. 8, solid white blocks in the primary cell 301 represent a search space set 91, solid black blocks in the primary cell 301 represent a search space set 92, blocks in the secondary cell 302 represent a search space set 93, and blocks in the secondary cell 303 represent a search space set 94.

The monitoring periodicity of the search space set 91 is set to one slot, the monitoring offset of the search space set 91 is set to zero slots, and the monitoring pattern of the search space set 91 is set to [1, 0, 0, 0, 0, 0, 0, 1, 0, 0, 0, 0, 0, 0]. In other words, the monitoring occasions for the search space set 91 corresponds to the first OFDM symbol (OFDM symbol #0) and the eighth OFDM symbol (OFDM symbol #7) in each of the slots.

The monitoring periodicity of the search space set 92 is set to two slots, the monitoring offset of the search space set 92 is set to zero slots, and the monitoring pattern of the search space set 92 is set to [1, 0, 0, 0, 0, 0, 0, 0, 0, 0, 0, 0, 0, 0]. In other words, the monitoring occasion for the search space set 92 corresponds to the first OFDM symbol (OFDM symbol #0) in each of the even-numbered slots.

The monitoring periodicity of the search space set 93 is set to two slots, the monitoring offset of the search space set 93 is set to zero slots, and the monitoring pattern of the search space set 93 is set to [0, 0, 0, 0, 0, 0, 0, 1, 0, 0, 0, 0, 0, 0]. In other words, the monitoring occasion for the search space set 93 corresponds to the eighth OFDM symbol (OFDM symbol #7) in each of the even-numbered slots.

The monitoring periodicity of the search space set 94 is set to two slots, the monitoring offset of the search space set 94 is set to one slot, and the monitoring pattern of the search space set 94 is set to [1, 0, 0, 0, 0, 0, 0, 0, 0, 0, 0, 0, 0, 0]. In other words, the monitoring occasion for the search space set 94 corresponds to the first OFDM symbol (OFDM symbol #0) in each of the odd-numbered slots.

The Type 0 PDCCH common search space set may be at least used for the DCI format with a Cyclic Redundancy Check (CRC) sequence scrambled by a System Information-Radio Network Temporary Identifier (SI-RNTI).

The Type 0a PDCCH common search space set may be at least used for the DCI format with a Cyclic Redundancy Check (CRC) sequence scrambled by a System Information-Radio NetworkTemporary Identifier (SI-RNTI).

The Type 1 PDCCH common search space set may be at least used for the DCI format with a CRC sequence scrambled by a Random Access-Radio Network Temporary Identifier (RA-RNTI) and/or a CRC sequence scrambled by a Temporary Cell-Radio Network Temporary Identifier (TC-RNTI).

The Type 2 PDCCH common search space set may be used for the DCI format with a CRC sequence scrambled by a Paging- Radio Network Temporary Identifier (P-RNTI).

The Type 3 PDCCH common search space set may be used for the DCI format with a CRC sequence scrambled by a Cell-Radio Network Temporary Identifier (C-RNTI).

The UE-specific PDCCH search space set may be at least used for the DCI format with a CRC sequence scrambled by a C-RNTI.

In the downlink communication, the terminal apparatus 1 detects a downlink DCI format. The detected downlink DCI format is at least used for resource assignment of the PDSCH. The detected downlink DCI format is also referred to as a downlink assignment. The terminal apparatus 1 attempts reception of the PDSCH. Based on the PUCCH resource indicated based on the detected downlink DCI format, the HARQ-ACK corresponding to the PDSCH (HARQ-ACK corresponding to the transport block included in the PDSCH) is reported to the base station apparatus 3.

In the uplink communication, the terminal apparatus 1 detects an uplink DCI format. The detected DCI format is at least used for resource assignment of the PUSCH. The detected uplink DCI format is also referred to as an uplink grant. The terminal apparatus 1 performs transmission of the PUSCH.

In configured scheduling (configured grant), the uplink grant for scheduling the PUSCH is configured for each transmission periodicity of the PUSCH. A part or all of pieces of information indicated by an uplink DCI format in a case that the PUSCH is scheduled by the uplink DCI format may be indicated by the uplink grant configured in a case of the configured scheduling.

The UL slot may be a slot including UL symbols. The special slot may be a slot including a UL symbol, a flexible symbol, and a DL symbol. The DL slot may be a slot including DL symbols.

The UL symbol may be an OFDM symbol configured or indicated for the uplink in time division duplex. The UL symbol may be an OFDM symbol configured or indicated for the PUSCH, the PUCCH, the PRACH, or the SRS. The UL symbol may be provided by a higher layer parameter tdd-UL-DL-ConfigurationCommon. The UL symbol may be provided by a higher layer parameter tdd-UL-DL-ConfigurationDedicated. The UL slot may be provided by the higher layer parameter tdd-UL-DL-ConfigurationCommon. The UL slot may be provided by the higher layer parameter tdd-UL-DL-ConfigurationDedicated.

The DL symbol may be an OFDM symbol configured or indicated for the downlink in time division duplex. The DL symbol may be an OFDM symbol configured or indicated for the PDSCH or the PDCCH. The DL symbol may be provided by the higher layer parameter tdd-UL-DL-ConfigurationCommon. The DL symbol may be provided by the higher layer parameter tdd-UL-DL-ConfigurationDedicated. The DL slot may be provided by the higher layer parameter tdd-UL-DL-ConfigurationCommon. The DL slot may be provided by the higher layer parameter tdd-UL-DL-ConfigurationDedicated.

The flexible symbol may be an OFDM symbol that is not configured or indicated as a UL symbol or a DL symbol among the OFDM symbols within a certain periodicity. The certain periodicity may be a periodicity given by a higher layer parameter dl-UL-TransmissionPeriodicity. The flexible symbol may be an OFDM symbol configured or indicated for the PDSCH, the PDCCH, the PUSCH, the PUCCH, or the PRACH.

The higher layer parameter tdd-UL-DL-ConfigurationCommon may be a parameter that configures one of a UL slot, and a DL slot, a special slot for each of one or multiple slots. The higher layer parameter tdd-UL-DL-ConfigurationDedicated may be a parameter that configures any one of a UL symbol, and a DL symbol, a flexible symbol for a flexible symbol in each of the one or multiple slots. tdd-UL-DL-ConfigurationCommon may be a common higher layer parameter. tdd-UL-DL-ConfigurationDedicated may be a dedicated higher layer parameter.

PUSCH-Config may be a dedicated higher layer parameter. PUSCH-ConfigCommon may be a common higher layer parameter. PUSCH-Config may be configured per BWP for PUSCH transmission. PUSCH-Config may include multiple higher layer parameters related to the PUSCH transmission. PUSCH-Config may be a UE-specific configuration. For example, PUSCH-Config for the terminal apparatus 1A, and the terminal apparatus 1B, the terminal apparatus 1C in one cell, or multiple higher layer parameters included in PUSCH-Config may vary. PUSCH-ConfigCommon may be configured per BWP for the PUSCH transmission. PUSCH-ConfigCommon may include multiple higher layer parameters related to the PUSCH transmission. PUSCH-ConfigCommon may be a cell-specific configuration. For example, PUSCH-ConfigCommon for the terminal apparatus 1A, and the terminal apparatus 1B, the terminal apparatus 1C in one cell may be common. For example, PUSCH-ConfigCommon may be provided in system information.

Repetition transmission may be applied to the PUSCH. For example, the repetition transmission may be applied to the PUSCH scheduled by the DCI. The repetition transmission may be applied to the PUSCH scheduled by the configured uplink grant. The PUSCH repetition type may be one of a PUSCH repetition type A and a PUSCH repetition type B. The PUSCH repetition type may be configured by a higher layer parameter. The PUSCH repetition type may be based on the DCI format. For example, the first PUSCH repetition type for the PUSCH scheduled by the DCI format 0_1 may be different from the second PUSCH repetition type for the PUSCH scheduled by the DCI format 0_2.

The number of repetitions for the PUSCH repetition transmission may be configured by a higher layer parameter. For example, the higher layer parameter numberOfRepetitioins may be a parameter including the number of repetitions for the PUSCH repetition transmission. For the PUSCH repetition transmission corresponding to the PUSCH repetition type A, the number of repetitions for the PUSCH repetition transmission may be determined according to the value of the higher layer parameter numberOfRepetitions. In the PUSCH repetition type A, for the PUSCH for which transmission is indicated by the DCI format with the CRC scrambled by any one of the C-RNTI, and the MCS-C-RNTI, the CS-RNTI, in a case that the resource assignment table includes numberOfRepetitions, the number of repetitions may be equal to numberOfRepetitions. In a case that one PUSCH-TimeDomainResourceAllocation includes one or multiple PUSCH-Allocations, the higher layer parameter numberOfRepetitions may be configured for each PUSCH-Allocation. PUSCH-TimeDomainResourceAllocation may be referred to as a resource assignment table.

The higher layer parameter pusch-AggregationFactor may be a parameter indicating the number of repetitions for the PUSCH repetition transmission. For the PUSCH repetition transmission corresponding to the PUSCH repetition type A, the number of repetitions for the PUSCH repetition transmission may be determined according to the value of the higher layer parameter pusch-AggregationFactor. In the PUSCH repetition type A, for the PUSCH for which transmission is indicated by the DCI format with the CRC scrambled by any one of the C-RNTI, and the MCS-C-RNTI, the CS-RNTI, in a case that the pusch-AggregationFactor is configured, the number of repetitions may be equal to the pusch-AggregationFactor. pusch-AggregationFactor may be configured for PUSCH-Config.

The number of repetitions corresponding to the PUSCH repetition type A may be the number of slots for the PUSCH repetition transmission. One TB may be repeated in one or multiple slots. Assignment of the same OFDM symbol may be applied to PUSCH repetitions transmitted in different slots.

The PUSCH repetition transmission corresponding to the PUSCH repetition type B may be based on a Nominal Repetition and an Actual Repetition.

A frequency hopping scheme may be configured by a higher layer parameter. The higher layer parameters frequencyHopping, frequencyHoppingDCI-0-1, and frequencyHoppingDCI-0-2 may be parameters providing a frequency hopping scheme for the PUSCH. For example, the frequency hopping scheme corresponding to the frequency hopping for the PUSCH may be configured by frequencyHoppingDCI-0-2 in PUSCH-Config. The frequency hopping scheme corresponding to the frequency hopping for the PUSCH may be configured by frequencyHopping in PUSCH-Config. The frequency hopping scheme may be configured that corresponds to the frequency hopping for the PUSCH transmission configured by frequencyHopping in configuredGrantConfig. The frequency hopping scheme may be any one of intra-slot frequency hopping, inter-slot frequency hopping, and inter-repetition frequency hopping. The frequency hopping interval corresponding to the intra-slot frequency hopping may be one slot or less. The frequency hopping interval corresponding to the inter-slot frequency hopping may be one slot or multiple slots. The frequency hopping interval corresponding to the inter-repetition frequency hopping may be based on the nominal repetition.

For example, the hopping interval may be provided by a higher layer parameter. For example, the higher layer parameter may be a dedicated higher layer parameter.

Whether to perform frequency hopping may be determined based at least on the DCI. Whether to apply frequency hopping for the PUSCH for which transmission is indicated by the DCI format may be determined based at least on the value of a frequency hopping flag field included in the DCI format. Whether to apply frequency hopping for the PUSCH for which transmission is indicated by the random access response grant may be determined based at least on the value of the frequency hopping flag field included in the random access response grant. For example, the frequency hopping for the PUSCH may be performed based at least on the value of the frequency hopping flag field being 1.

The intra-slot frequency hopping may be applied to PUSCH transmission in one or multiple slots. For example, the intra-slot frequency hopping may be applied to the PUSCH repetition transmission. For the PUSCH to which the intra-slot frequency hopping is applied, mapping may be switched for every one or multiple OFDM symbols. For example, for the PUSCH to which the intra-slot frequency hopping is applied, switching may be performed for every one or multiple OFDM symbols to determine whether the mapping of the resource blocks corresponds to a first hop or a second hop. In a case that intra-slot frequency hopping is performed for the PUSCH, switching between the first hop and the second hop may be performed for every one or multiple OFDM symbols. There may be a difference of $RB_{offset}$ between the position of the first resource block of the first hop and the position of the first resource block of the second hop. $RB_{offset}$ may be configured by a higher layer parameter. The one or multiple OFDM symbols may be one slot or less. The one or multiple OFDM symbols may be half the number of OFDM symbols for the PUSCH in one slot. The intra-slot frequency hopping may be applied to the PUSCH corresponding to the PUSCH repetition type A.

The inter-slot frequency hopping may be applied to PUSCH transmission in multiple slots. For the PUSCH to which inter-slot frequency hopping is applied, the mapping of the resource blocks may be switched for each slot. For example, the inter-slot frequency hopping may be applied to the PUSCH repetition transmission. In a case that the inter-slot frequency hopping is performed for the PUSCH, switching may be performed for every slot to determine whether the mapping of the resource blocks corresponds to the first hop or the second hop. For example, in a case that a certain slot has a slot index $n^{\mu}_{s,\,f}$ that is even-numbered, the PUSCH transmission in the slot may correspond to the first hop. For example, in a case that the certain slot has a slot index $n^{\mu}_{s,\,f}$ that is odd-numbered, the PUSCH transmission in the slot may correspond to the second hop. The inter-slot frequency hopping may be applied to the PUSCH corresponding to one of the PUSCH repetition type A and the PUSCH repetition type B.

The inter-repetition frequency hopping may be applied to the PUSCH corresponding to the PUSCH repetition type B. For the PUSCH to which the inter-repetition frequency hopping is applied, switching between the first hop and the second hop may be performed based on the nominal repetition.

At least two transmission schemes may be supported for the PUSCH. For example, Codebook-based transmission may be one of the transmission schemes for the PUSCH. For example, Non-codebook-based transmission may be one of the transmission schemes for the PUSCH. The higher layer parameter may provide one of the codebook-based transmission and the non-codebook-based transmission. For example, in a case that the higher layer parameter is set to 'codebook', the terminal apparatus 1 may be configured with the codebook-based transmission. For example, in a case that the higher layer parameter is set to 'nonCodebook', the terminal apparatus 1 may be configured with the non-codebook-based transmission. The higher layer parameter may be txConfig. The higher layer parameter may be usage. For example, in a case that the higher layer parameter is not configured, the terminal apparatus 1 need not expect that scheduling is performed by either of the DCI format 0_1 and the DCI format 0_2. In a case that a PUSCH is scheduled by the DCI format 0_0, transmission of the PUSCH may be based at least on one antenna port.

In the codebook-based transmission, the PUSCH may be scheduled by the DCI format. The DCI format may be any one of the DCI format 0_0, the DCI format 0_1, and the DCI format 0_2. The codebook-based transmission may be configured in such a manner that the PUSCH is transmitted semi-statically. The terminal apparatus 1 may determine one or multiple precoders for the PUSCH transmission. For example, the precoder may be determined based on at least a part or all of an SRS resource indicator (SRI), a Transmitted Precoding Matrix Indicator (TPMI), and a Transmission rank (or rank). For example, the SRI may be provided by a DCI field of one or two SRS resource indicators. For example, the TPMI may be provided by a DCI field of one or two pieces of Precoding information. For example, the transmission rank may be provided by a DCI field of the number of layers (the number of transmission layers). For example, the TPMI and the transmission rank may be provided by a DCI field of one or two pieces of "Precoding information and the number of layers". The SRI may be provided by a first higher layer parameter. The TPMI and the transmission rank may be provided by a second higher layer parameter. The first higher layer parameter may be srs-ResourceIndicator or srs-ResourceIndicator2. The second higher layer parameter may be precodingAndNumberOfLayers or precodingAndNumberOfLayers2.

An SRS resource set applied to the PUSCH may be determined based on the higher layer parameter. The PUSCH may be scheduled by the DCI format 0_1 or the DCI format 0_2. The higher layer parameter may be srs-ResourceSetToAddModList or srs-ResourceSetToAddModeListDCI-0-2. The higher layer parameter may be a higher layer parameter configured in SRS-Config.

In a case that the higher layer parameter usage is set to 'codebook', one or two SRS resource sets may be configured in srs-ResourceSetToAddModList or srs-ResourceSetToAddModListDCI-0-2. The higher layer parameter usage may be configured in the higher layer parameter SRS-ResourceSet.

In a case that one SRS resource set is configured, the SRI and the TPMI may be given by the DCI field. The DCI field may include a DCI field of one SRS resource indicator and a DCI field of one piece of "precoding information and number of layers". The TPMI may be used to indicate a precoder. The precoder may be applied across v layers {0, ..., v - 1}. In a case that multiple SRS resources are configured, one SRS resource may be selected by the SRI. The precoder may correspond to one SRS resource. A transmission precoder (precoder) may be selected from a codebook (uplink codebook). For example, the codebook may have the number of antenna ports. The number of antenna ports may be the same as the higher layer parameter nrofSRS-Ports. In a case that the higher layer parameter txConfig is set to 'codebook', the terminal apparatus 1 may be configured with at least one SRS resource. The indicated SRI may relate to transmission of the SRS resource identified by the SRI. For example, the indicated SRI may relate to recent transmission of the SRS resource identified by the SRI and may precede the PDCCH carrying the SRI.

In a case that two SRS resource sets are configured, one or two SRIs and one or two TPMIs may be given by the DCI field. For example, the DCI field may include one or both of a DCI field of the SRS resource indicator and a DCI field of "precoding information and number of layers". The terminal apparatus 1 may apply the indicated SRI and TPMI to one or multiple PUSCH repetitions. For example, in accordance with the SRS resource set of the PUSCH repetition, the terminal apparatus 1 may apply the indicated SRI and TPMI to one or multiple PUSCH repetitions. Each TPMI may be used to indicate the precoder based on a code point for SRS resource set indication. The precoder may be applied to a zeroth layer to a v-1th layer. The precoder may correspond to the SRS resource selected by the SRI. Multiple SRS resources may be configured for an applicable SRS resource set. For example, in a case that multiple SRS resources are configured for the applied SRS resource set, the precoder may correspond to the SRS resource selected by the corresponding SRI. For one or two TPMIs, the transmission precoder (precoder) may be selected from the codebook (uplink codebook). In a case that two SRIs are indicated, the terminal apparatus 1 may expect that the same number of antenna ports are used for the indicated two SRS resources. For example, the number of antenna ports may be provided by the higher layer parameter. In a case that two SRS resources are configured and the higher layer parameter usage is set to 'codebook', the terminal apparatus 1 need not expect that different numbers of SRS resources are configured in the two SRS resource sets.

In the codebook-based transmission, the terminal apparatus 1 may determine a codebook subset. For example, the codebook subset may be determined based at least on the TPMI. The codebook subset may be determined in response to reception of a certain higher layer parameter. The certain higher layer parameter may be codebookSubset or codebookSubsetDCI-0-2. Any of 'fullyAndPartialAndNonCoherent', 'partialAndNonCoherent', and 'nonCoherent' may be set for the certain higher layer parameter. In a case that the higher layer parameter ul-FullPowerTrasmission is set to 'fullpowerMode2', a certain higher layer parameter is set to 'partialAndNonCoherent', and the SRS resource set for the codebook includes at least one SRS resource with four ports and at least one SRS resource with two ports, the codebook subset associated with the two-port SRS resource (SRS resource with two ports) may be 'nonCoherent'. The maximum transmission rank (or maximum rank) may be configured for the PUSCH by a higher layer parameter maxRank or a higher layer parameter maxRankDCI-0-2.

The terminal apparatus 1 may report the UE capability. In a case that the terminal apparatus 1 reports the UE capability of 'partialAndNonCoherent' transmission, the terminal apparatus 1 need not expect that the codebook subset having 'fullyAndPartialAndNonCoherent' is configured.

In a case that the terminal apparatus 1 reports the UE capability of the 'nonCoherent' transmission, the terminal apparatus 1 need not expect that the codebook subset with 'fullyAndPartialAndNonCoherent' or 'partialAndNonCoherent' is configured.

In a case that the higher layer parameter for the codebook nrofSRS-Ports indicates that the maximum number of configured SRS antenna ports is 2, the terminal apparatus 1 need not expect that the higher layer parameter with 'partialAndNonCoherent' set therefor is configured. The higher layer parameter may be codebookSubset or codebook-SubsetForDCI-Format0-2. The number of antenna ports may be determined by the higher layer parameter nrofSRS-Ports.

For the codebook-based transmission, one SRS resource may be determined based on the SRI from the SRS resource set. Except in a case that the first higher layer parameter is set to 'fullpowerMode2', the maximum number of configured SRS resources for codebook-based transmission may be 2. The first higher layer parameter may be ul-FullPowerTransmission. The DCI may indicate transmission of the SRS resource. For example, in a case that an aperiodic SRS is configured, the SRS request field in the DCI may indicate (trigger) transmission of an aperiodic SRS resource. The terminal apparatus 1 need not expect that the first higher layer parameter for which 'fullpowerMode1' is set and the second higher layer parameter for which 'fullAndPartialAndNonCoherent' is set are configured.

The terminal apparatus 1 may transmit the PUSCH by using the same antenna ports as one or multiple SRS ports (antenna ports) in the SRS resource indicated by the DCI format or the higher layer parameter. For example, the SRS port may be the same as the antenna port for PUSCH transmission. The DMRS antenna port may be determined according to ordering of the DMRS ports.

In a case that multiple SRS resources are configured by the SRS resource set, the terminal apparatus 1 may expect that the higher layer parameter nrofSRS-Ports that has the same value is configured for these SRS resources. The SRS resource set may be the higher layer parameter SRS-ResourceSet with the higher layer parameter usage for which 'codebook' is set.

In a case that the higher layer parameter is set to 'fullpowerMode2', one or multiple SRS resources with the same number of SRS ports or different numbers of SRS ports may be configured in the SRS resource set for the codebook. In a case that the higher layer parameter is set to 'fullpowerMode2' and multiple SRS resource sets are configured in the SRS resource set, up to two different spatial relations may be configured for all SRS resources in the SRS resource set for the codebook. In a case that the higher layer parameter is set to 'fullpowerMode2', up to two or four SRS resources may be configured in the SRS resource set for the codebook. Up to eight SRS resources may be configured in one SRS resource set. The SRS resource set for the codebook may be an SRS resource set with the higher layer parameter usage set to 'codebook'.

For non-codebook-based transmission, the PUSCH may be scheduled by the DCI format 0_0, the DCI format 0_1, or the DCI format 0_2. For the non-codebook-based transmission, the PUSCH may be configured semi-statically. The terminal apparatus 1 may determine the precoder and the transmission rank of the PUSCH based on the SRI. For example, in a case that multiple SRS resources are configured, the SRI may be given by one or two SRS resource indicators in the DCI. For example, the SRI may be given by the higher layer parameter. The SRS resource set applied to the PUSCH may be defined by an entry in the higher layer parameter. The higher layer parameter may be srs-ResourceSetToAddModList or srs-ResourceSetToAddModListDCI-0-2.

The terminal apparatus 1 may use one or multiple SRS resources for SRS transmission. The maximum number of SRS resources in one SRS resource set may be transmitted to the base station apparatus 3 as the UE capability. SRS resources may be configured for simultaneous transmission in the same OFDM symbol. In one SRS resource set, the maximum number of SRS resources configured for simultaneous transmission in the same OFDM symbol and the maximum number of SRS resources may be the UE capability. Multiple SRS resources transmitted at the same time may occupy the same resource block. One SRS port may be configured in each SRS resource. One or two SRS resource sets may be configured in the higher layer parameter srs-ResourceSetToAddModList with the higher layer parameter usage set to 'nonCodebook' in the higher layer parameter SRS-ResourceSet. In a case that two SRS resource sets are configured, one or two SRI may be given by the DCI field. The DCI field may be a DCI field of two SRS resource indicators.

The terminal apparatus 1 may apply the indicated SRI to one or multiple PUSCH repetitions. For example, in accordance with the SRS resource set of the PUSCH repetition, the terminal apparatus 1 may apply the indicated SRI to one or multiple PUSCH repetitions. The maximum number of SRS resources per SRS resource set configured for non-codebook-based transmission may be 4. The maximum number of SRS resources per SRS resource set configured for non-codebook-based transmission may be 8. Each of the indicated one or two SRIs may be associated with the latest transmission of an SRS resource in the SRS resource set identified by the SRI. The SRS transmission may be before the PDCCH carrying the SRI. The terminal apparatus 1 need not expect that the different numbers of SRS resources are configured in the two SRS resource sets.

In a case that multiple PDCCH candidates (PDCCH candidate (s)) are associated with a search space set configured by the higher layer parameter, one PDCCH candidate is used. The one PDCCH candidate may be one of the two PDCCH candidates that starts earlier. The higher layer parameter may be a searchSpaceLinking.

For non-codebook-based transmission, the UE may compute the precoder. For example, the precoder used for SRS transmission may be calculated based on measurement of an NZP CSI-RS resource. One NZP CSI-RS resource may be configured for the SRS resource set for the non-codebook. For example, the SRS resource set for the non-codebook may be an SRS resource set with the higher layer parameter set to 'nonCodebook'.

In a case that an aperiodic SRS resource set is configured, the NZP-CSI RS may be indicated through the SRS request field. The SRS request field may be one of the DCI fields in any one of the DCI format 0_1, the DCI format 0_2, the DCI format 1_1, and the DCI format 1_2. The first higher layer parameter may indicate an association between an aperiodic SRStriggerting state (SRS) and an SRS resource set. The first higher layer parameter, a triggered SRS resource, srs-ResourceSetId, and csi-RS may be configured in the higher layer parameter SRS-ResourceSet. The higher layer parameter csi-RS may indicate NZP-CSI-RS-ResourceId. The higher layer parameter SRS-ResourceSet associated with the SRS request may be defined by an entry in a list that is a higher layer parameter. The list that is a higher layer parameter may be the higher layer parameter srs-ResourceSetToAddModList or srs-ResourceSetToAddModListDCI-0-2. The terminal apparatus 1 need not expect to update the precoding information (SRS precoding information). For example, in a case that the gap between the last OFDM symbol of the reception of the aperiodic NZP-CSI-RS resource and the first OFDM symbol of the aperiodic SRS transmission is equal to or less than the 42OFDM symbol, the terminal apparatus 1 need not expect to update the precoding information.

In a case that the aperiodic SRS associated with the aperiodic NZP CSI-RS resource is configured, the presence of the associated CSI-RS may be indicated by the SRS request field. In a case that the value of the SRS request field is not '00' and the scheduling DCI is not used for cross carrier scheduling or cross BWP scheduling (cross bandwidth part scheduling), the presence of the CSI-RS may be indicated by the SRS request field.

In a case that a periodic or semi-persistent SRS resource set is configured, the NZP-CSI-RS-ResourceId for measurement may be indicated through a higher layer parameter associatedCSI-RS.

The terminal apparatus 1 may perform one to-one mapping. The one to-one mapping may include mapping from the SRI to the DMRS port and mapping from the SRI to the corresponding PUSCH layer $\{0, ..., v - 1\}$. A zeroth PUSCH layer to a v-1th PUSCH layer may be provided. v may be the number of layers. The number of layers may be configured by the higher layer parameter. The terminal apparatus 1 may transmit the PUSCH by using the same antenna port as the SRS port. For example, the SRS port in the SRS resource indicated by the SRI may be indexed as $p_i = 1000 + i$. For example, the SRS port in the i+1th SRS resource may be $p_i$. The SRS port in the i+1th SRS resource may also be indexed as $p_i$. $p_i$ may be $1000 + i$.

In the non-codebook-based transmission, the terminal apparatus 1 may not expect that both Spatial relation information (info) for the SRS resource and the higher layer parameter associatedCSI-RS in the higher layer parameter SRS-ResourceSet for the SRS resource set are configured. The spatial relation information may be determined by a higher layer parameter. The spatial relation information may be a higher layer parameter spatialRelationInfo. In the non-codebook-based transmission, in a case that at least one SRS resource is configured in the SRS resource set with the higher layer parameter set to 'nonCodebook', the terminal apparatus 1 may be scheduled by the DCI format 0_1 or the DCI format 0_2.

One or multiple Sounding Reference Signal resource sets (SRS resource sets) may be configured by the first higher layer parameter. The first higher layer parameter may be SRS-ResourceSet or SRS-PosResourceSet. In each SRS resource set, K SRS resources may be configured. K may be an integer of 1 or greater. The maximum value of K may be indicated by the UE capability. The maximum value of K may be 16. The adaptability of the SRS resource set may be configured in a second higher layer parameter. The second higher layer parameter may be usage. For example, in a case that the second higher layer parameter is set to 'beamManagement', then in a given time instance, one SRS resource may be transmitted in each of the one or multiple SRS resource sets. Multiple SRS resources in different SRS resource sets may be transmitted simultaneously. For example, in different SRS resource sets of the same BWP, multiple SRS resources with the same time domain behaviour may be transmitted simultaneously.

For the aperiodic SRS, at least one DCI field may be used to select at least one from the configured SRS resource sets.

The one or multiple SRS parameters may be configured by the first higher layer parameter. For example, the one or multiple SRS parameters may be semi-statically configured by the second higher layer parameter. The first higher layer parameter may be SRS-Resource or SRS-PosResource. The second higher layer parameter may determine an SRS resource configuration identity (ID). The second higher layer parameter may be srs-ResourceId or SRS-PosResourceId. The one or multiple SRS parameters may include some or all of the first higher layer parameter to the twentieth higher layer parameter. The one or multiple SRS parameters may include parameters having the same functions as those of some or all of the first higher layer parameter to the twentieth higher layer parameter. The one or multiple SRS parameters may be determined based on the DCI format.

The number $N^{SRS}_{ap}$ of SRS ports may be determined by a third higher layer parameter. The third higher layer parameter may be nrofSRS-Ports. The SRS port may be an antenna port. For example, the SRS port may be an antenna port for the SRS. A time domain behaviour of the SRS resource configuration may be determined according to a fourth higher layer parameter. The fourth higher layer parameter may be resourceType. For example, the time domain behaviour may be any one of periodic, semi-persistent, and aperiodic. The period and offset may be determined by a fifth higher layer parameter. The period and offset may be at a slot level. The period and offset may be defined for a periodic SRS resource or a semi-persistent SRS resource. The fifth higher layer parameter may be periodicityAndOffset-p or periodicityAndOffset-sp. For example, multiple SRS resources with different periodicities need not be expected to be configured in the same SRS resource set. In a case that the fourth higher layer parameter is set to 'aperiodic', the slot level offset may be defined by a sixth higher layer parameter. The sixth higher layer parameter may be slotOffset. In a case that the fourth higher layer parameter is set to 'aperiodic', a list of available slot offset values may be defined by a seventh higher layer parameter. The seventh higher layer parameter may be AvailableSlotOffset. The list of available slot offset values may be a list of different available slot offset values of 0 to 4. In a case that the reference slot is n+k, then the available slot offset may be the offset from the n+k slot to a certain slot. In the certain slot, an aperiodic SRS resource set may be transmitted. A slot n may be the slot of a triggering DCI. The triggering DCI may trigger transmission of the aperiodic SRS. A slot k may be determined by a sixth higher layer parameter. The seventh higher layer parameter may be configured by up to four values. For an aperiodic SRS resource set, the slot-level offset may be defined by the sixth higher layer parameter for each SRS resource.

Further, an eighth higher layer parameter may be used to define the number of OFDM symbols $N^{SRS}_{symb}$ (the number of continuous OFDM symbols) in the SRS resource and a starting OFDM symbol (the starting position in the time domain) of the SRS resource. The eighth higher layer parameter may be resourceMapping. The number of repetitions (repetition factor) $R_{fac}$ may be configured by the eighth higher layer parameter. In a case that the number of repetitions is not configured by the eighth higher layer parameter, the number of repetitions may be the same as the number of OFDM symbols in the SRS resource. $B_{SRS}$ and $C_{SRS}$ corresponding to the SRS bandwidth may be defined by a ninth higher layer parameter. In a case that the ninth higher layer parameter is not configured, $B_{SRS}$ may be 0. The ninth higher layer parameter may be freqHopping. A partial frequency sounding factor and a starting resource block index for partial frequency sounding may be defined by a tenth higher layer parameter. The tenth higher layer parameter may be FreqScalingFactor and StartRBIndex. A frequency domain position may be defined by an eleventh higher layer parameter. A configurable shift may be configured by a twelfth higher layer parameter. The eleventh higher layer parameter may be freqDomainPosition. The twelfth higher layer parameter may be freqDomainShift.

The number of OFDM symbols may be configured by the eighth higher layer parameter. The second number of OFDM symbols may be determined based on the DCI format. In a case that the first number of OFDM symbols is configured and the second number of OFDM symbols is provided, the number of OFDM symbols in the SRS resource may correspond to the second number of OFDM symbols.

The first number of repetitions may be configured by the eighth higher layer parameter. The second number of repetitions may be based on the DCI format. In a case that the first number of repetitions is set and the second number of repetitions is determined, the second number of repetitions may be used and the first number of repetitions need not be used.

Further, the number of combs (number of transmission combs) may be defined by a thirteenth higher layer parameter. The thirteenth higher layer parameter may be transmissionComb. The number of combs may be any one of 2, 4, 8, and 16. The cyclic shift (initial cyclic shift value) may be defined by a fourteenth higher layer parameter. The fourteenth higher layer parameter may be any one of cyclicShift-n2, cyclicShift-n4, cyclicShift-n8, and cyclicShift-n16. The fourteenth higher layer parameter may be included in the thirteenth higher layer parameter. A comb offset (transmission comb offset) may be defined by a fifteenth higher layer parameter. The fifteenth higher layer parameter may be any one of combOffset n2, combOffset n4, combOffset n8, and combOffset n16. The fifteenth higher layer parameter may be included in the thirteenth higher layer parameter. An SRS sequence ID may be defined by a sixteenth higher layer parameter. The sixteenth higher layer parameter may be sequenceId.

A first cyclic shift (or initial cyclic shift value) may be configured by the fourteenth higher layer parameter. A second cyclic shift (or initial cyclic shift value) may be determined based on the DCI format. In a case that the first initial cyclic shift value is configured and in a case that the second initial cyclic shift value is determined, the second initial cyclic shift value may be used and the first initial cyclic shift value may not be used. In a case that the first initial cyclic shift value is configured and the second initial cyclic shift value is determined, the sum of the first initial cyclic shift value and the second initial cyclic shift value may be used.

A third cyclic shift (or initial cyclic shift value) may be determined based on one or multiple values. One of one or multiple values may be the number of OFDM symbols in the SRS resource (the number of OFDM symbols constituting the SRS resource). One of the one or multiple values may be the number of repetitions (the number of repetitions for the SRS). One of the one or multiple values may be a maximum number of cyclic shifts. That is, the third cyclic shift (or initial cyclic shift value) may be determined based on some or all of the number of OFDM symbols in the SRS resource, the number of repetitions, and the maximum number of cyclic shifts.

In a case that the first initial cyclic shift value is configured and the third initial cyclic shift value is determined, the third initial cyclic shift value may be used and the first initial cyclic shift value may not be used. In a case that the first initial cyclic shift value is configured and the third initial cyclic shift value is determined, the sum of the first initial cyclic shift value and the third initial cyclic shift value may be used.

A first SRS sequence ID may be configured by a sixteenth higher layer parameter. A second SRS sequence ID may be determined based on the DCI format. In a case that the first SRS sequence ID is configured and the second SRS sequence ID is determined, the second SRS sequence ID may be used and the first SRS sequence ID may not be used. In a case that the first SRS sequence ID is configured and the second SRS sequence ID is determined, the sum of the first SRS sequence ID and the second SRS sequence ID may be used.

The third SRS sequence ID may be determined based on some or all of the number of OFDM symbols in the SRS resource, the number of repetitions, and the maximum number of cyclic shifts. In a case that the first SRS sequence ID is configured and the third SRS sequence ID is determined, the third SRS sequence ID may be used and the first SRS sequence ID may not be used. In a case that the first SRS sequence ID is configured and the third SRS sequence ID is determined, the sum of the first SRS sequence ID and the third SRS sequence ID may be used.

Further, the spatial relation between the reference signal (RS) and the SRS may be defined by a seventeenth higher layer parameter. For example, the spatial relation between the reference reference signal (referenceRS) and a target SRS may be configured by the seventeenth higher layer parameter. The seventeenth higher layer parameter may be spatialRelationInfo or spatialRelationInfoPos. The configuration of the spatial relation may include the ID of the reference signal (reference reference signal). The reference signal may be an SS/PBCH block. The reference signal may be the CSI-RS. The reference signal may be a certain SRS. In one serving cell, the reference signal may be configured. For example, one serving cell may be indicated by an eighteenth higher layer parameter. The certain SRS may be configured for one BWP in one serving cell. For example, the one serving cell may be the same serving cell as the target SRS. For example, the one BWP may be configured by a nineteenth higher layer parameter. The eighteenth higher layer parameter may be servingCellId. The nineteenth higher layer parameter may be uplinkBWP. The one or multiple SRS parameters may be configured by the first higher layer parameter. For example, the first higher layer parameter may be SRS-Resource or SRS-PosResource.

In a case that the twentieth higher layer parameter is not configured, the number of combs may be any one of 2, 4, and 8. In a case that the twentieth higher layer parameter is configured, the number of combs may be any one of 2, 4, 8, and 16. In a case that the twentieth higher layer parameter is not configured, the fourteenth higher layer parameter may be any one of cyclicShift-n2, cyclicShift-n4 and cyclicShift-n8. In a case that the twentieth higher layer parameter is configured, the fourteenth higher layer parameter may be any one of cyclicShift-n2, cyclicShift-n4, cyclicShift-n8, and cyclicShift-n16.

The one or multiple SRS parameters may include some or all of the second higher layer parameter to the twentieth higher layer parameter. The fact that the SRS is transmitted may mean that the SRS resource is transmitted. The fact that the SRS is transmitted may mean that the SRS resource set is transmitted. The SRS transmission may be SRS resource transmission. The SRS transmission may be SRS resource set transmission.

The SRS resource may occupy one or multiple OFDM symbols. For example, the SRS resource may occupy $N^{SRS}_{symb}$ OFDM symbols among the last six OFDM symbols of one slot. For example, $N^{SRS}_{symb}$ may be any one of 1, 2, and 4. For example, the SRS resource may occupy any one of the OFDM symbol positions in one slot. For example, the SRS resource may occupy $N^{SRS}_{symb}$ adjacent OFDM symbols in one slot. The $N^{SRS}_{ap}$ antenna ports may be mapped to each OFDM symbol of the resource. $N^{SRS}_{ap}$ may be 4 or 8. For example, $N^{SRS}_{ap}$ antenna ports of the SRS resource may be mapped to each OFDM symbol of the resource. $N^{SRS}_{symb}$ may be any one of 1, 2, 4, 8, and 12. $N^{SRS}_{symb}$ may be any one of 1, 2, 4, 8, 10, 12, and 14. In a case that $N^{SRS}_{ap}$ is 8, $N^{SRS}_{symb}$ may be an even number. For example, $N^{SRS}_{ap, 1}$ antenna ports may be mapped to slots with even-numbered slot indices. For example, $N^{SRS}_{ap, 2}$ antenna ports may be mapped to slots with odd-numbered slot indices. $N^{SRS}_{ap}$ may be $N^{SRS}_{ap, 1} + N^{SRS}_{ap, 2}$.

In a case that the PUSCH and the SRS are transmitted in the same slot, the transmission may be configured in such a manner that the SRS is transmitted after the PUSCH is transmitted. For example, in a case that the PUSCH and the SRS are transmitted in one slot in one serving cell, the transmission may be configured in such a manner that the SRS is transmitted after the transmission of the DMRS corresponding to the PUSCH.

In a case that a PUSCH transmission or a PUCCH transmission overlaps with an SRS transmission, the SRS need not be transmitted in the overlapping OFDM symbols. For example, in one serving cell, in a case that the PUSCH transmission or the PUCCH transmission overlaps with the SRS transmission in the time domain, the SRS need not be transmitted in the overlapping OFDM symbols. In a case that the PUSCH transmission or the PUCCH transmission overlaps with the SRS transmission, the SRS need not be transmitted. For example, in a case that $N^{SRS}_{ap}$ is 8 and in a case that the PUSCH transmission or the PUCCH transmission overlaps with the SRS, the SRS need not be transmitted. For example, in a case that $N^{SRS}_{ap}$ is 8 and in a case that the PUSCH transmission or the PUCCH transmission overlaps with the SRS, the SRS need not be transmitted in the overlapping OFDM symbol sets. The OFDM symbol set may include two OFDM symbols.

In a case that the higher layer parameter resourceType is set to 'periodic', a target SRS resource (SRS resource) with one spatial domain transmission filter may be transmitted. In a case that a certain higher layer parameter includes one ID, the target SRS resource with one spatial domain filter may be transmitted. The one spatial domain filter may be used for reception or transmission of the reference reference signal (reference signal). The reference reference signal may be an SS/PBCH block, a CSI-RS, or a certain SRS. For example, in a case that a higher layer parameter includes the ID of any one of 'ssb-Index', 'ssb-IndexServing', and 'ssb-IndexNcell', the reference reference signal may be an SS/PBCH block. For example, in a case that a certain higher layer parameter includes the ID of either of 'csi-RS-Index' or 'csi-RS-IndexServing', the reference reference signal may be a periodic CSI-RS or a semi-persistent CSI-RS. For example, in a case that the certain higher layer parameter includes the ID of either of 'srs' and 'srs-spatialRelation', the reference reference signal may be a periodic SRS. The reference reference signal may be a DL PRS.

In a case that the higher layer parameter resourceType is set to 'semi-persistent', the SRS transmission may start from the first slot after the first slot ($n + 3N^{subframe, \mu}_{slot}$ slot). For example, in the first slot, an assumption for the SRS transmission may start to be applied. Slot n may be the slot in which the PUCCH is transmitted. For example, the PUCCH may carry HARQ-ACK information corresponding to the PDSCH carrying an activation command. In other words, in a case that the activation command is received, the SRS transmission may be started from the first slot. In a case that the activation command is received, the assumption for the SRS transmission may start to be applied in the first slot. The activation command may include an assumption for a spatial relationship (or a spatial relationship). The assumption for the spatial relationship may be provided by a list. The list may be a list of reference signal IDs. For example, each of the reference signal IDs may refer to any one of an SS/PBCH block, a NZPCSI-RS resource, and an SRS resource. The NZP CSI-RS resource may be configured in one serving cell. The SRS resource may be configured in one serving cell and one uplink BWP. For example, one serving cell may be indicated by a first field in the activation command. For example, one uplink BWP may be indicated by the second field in the activation command. The first field may be a Resource Serving Cell ID field. The second field may be a Resource BWP ID field. For example, one serving cell may be the same serving cell as the SRS resource set. For example, one uplink BWP may be the same uplink BWP as the SRS resource set.

In a case that one SRS resource in the activated SRS resource set (resource set) is configured by the higher layer parameter, the ID of a first reference signal in the activation command may be assumed to overwrite the ID of a second reference signal in the higher layer parameter. The higher layer parameter may be spatialRelationInfo or spatialRelationInfoPos.

In a case that a deactivation command is received and in a case that the PUCCH is transmitted in slot n, stoppage of the SRS transmission may start to be applied in the first slot. The deactivation command may be carried by the PDSCH. The PUCCH may include HARQ-ACK information corresponding to the PDSCH. Stoppage of SRS transmission corresponding to a deactivated SRS resource set may start to be applied in the first slot. The first slot may be a first slot after an $n + 3N^{subframe, \mu}_{slot}$ slot. $\mu$ may be an SCS configuration for the PUCCH.

In a case that the terminal apparatus 1 has an active semi-persistent SRS resource configuration (active semi-persistent SRS resourceconfiguration) and does not receive the deactivation command, the semi-persistent SRS resource configuration may be regarded as active in one uplink BWP. One uplink BWP may be active. In a case that the terminal apparatus 1 has an active semi-persistent SRS resource configuration and receives the deactivation command, the semi-persistent SRS resource configuration may be suspended.

In a case that the higher layer parameter resourceType is set to 'aperiodic', some or all of operations 1 to 7 may be applied.

Operation 1 may include receiving one configuration of one or multiple SRS resource sets.

Operation 2 may include receiving one command. One command may be one downlink DCI-based command. One command may be one group common DCI-based command. One command may be one uplink DCI-based command. A minimal time interval may be $N_2$ OFDM symbols and an additional time period $T_{switch}$. The minimum time interval may be a minimum time interval from the last OFDM symbol of the PDCCH triggering the aperiodic SRS transmission to the first OFDM symbol of the SRS resource. The minimum time interval may be $N_2+14$ OFDM symbols and the additional time period $T_{switch}$. The minimum time interval may be determined based at least on the minimum SCS. The minimum SCS may be a minimum SCS among SCSs of the PDCCH, the first uplink carrier, the second uplink carrier, and the SRS. The additional time period $T_{switch}$ may be 0.

Operation 3 may include triggering of an aperiodic SRS with no data and no CSI. For example, the DCI format 0_1 and the DCI format 0_2 may trigger the aperiodic SRS. The aperiodic SRS need not include data or CSI.

In operation 4, the terminal apparatus 1 may transmit the SRS in each of one or multiple SRS resource sets and in the t+1th available slot. The SRS may be an aperiodic SRS. The one or multiple SRS resource sets may be triggered by the DCI. The DCI triggering the aperiodic SRS may be received in the first slot n. At least one resource set (SRS resource set) may be configured by a higher layer parameter availableSlotOffset. The available slots may be counted from the second slot. The second slot may be determined based on at least the first slot and an offset value (slot k). The offset value may be configured by the second higher layer parameter. The second higher layer parameter may be slotOffset. The second higher layer parameter may be configured for each of the one or multiple SRS resource sets to be triggered. The available slots may be slots that satisfy a condition. The condition may be that a UL symbol or a flexible symbol is present for a time domain position corresponding to multiple SRS resources in one resource set (SRS resource set). The condition may be that a minimum timing requirement UEcapability is satisfied. The minimum timing requirement may be a minimum timing request between a triggering PDCCH and all SRS resources in one resource set. From the first OFDM symbol carrying the DCI of the SRS request to the last OFDM symbol of the triggered SRS resource set, the terminal apparatus 1 need not expect to receive an SFI indication, a UL cancellation indication, or dynamic scheduling of a downlink channel/signal in the flexible symbol. From the first OFDM symbol carrying the DCI of the SRS request to the last OFDM symbol of the triggered SRS resource set, the terminal apparatus 1 need not expect to change the determination of the available slot. The t may be configured by a third higher layer parameter. The third higher layer parameter may be an availableSlotOffset. For example, the t may be configured with up to four values for each of the one or multiple SRS resource sets to be triggered. The t may be based on a subcarrier spacing for the SRS transmission to be triggered. In an SRS resource set in which the third higher layer parameter is not configured, the t may be 0.

Operation 5 may include transmission of the SRS in each of the one or multiple SRS resource sets and in the first slot. The SRS may be an aperiodic SRS. The DCI triggering the aperiodic SRS may be received in slot n. No resource set (SRS resource set) may be configured with the first higher layer parameter. The second higher layer parameter may be configured. The second higher layer parameter may be ca-SlotOffset. The first slot may be determined based at least on slot n and slot k.

Operation 6 may include transmitting the target SRS resource with one spatial domain filter.

Operation 7 may include application of update of a spatial relationship for one SRS resource to the SRS transmission. The SRS transmission may be started from the first slot after $n+3N_{slot}^{subframe, \mu}$ slots. The $\mu$ may be the SCS configuration for the PUCCH. An update command may be carried by the PDSCH. The HARQ-ACK corresponding to the PDSCH may be transmitted in slot n. One SRS resource may be configured by the higher layer parameter SRS-Resource. The terminal apparatus 1 may receive the update command (spatial relation update command). The update command may include an assumption for the spatial relationship. The assumption for the spatial relationship may be provided by a list. The list may be a list referring to one or multiple reference signal IDs.

The higher layer parameter resourceType being set to 'aperiodic' may indicate that the SRS resource corresponds to an aperiodic SRS (aperiodic). The higher layer parameter resourceType being set to 'semi-persistent' may indicate that the SRS resource corresponds to a semi-persistent SRS (semi-persistent). The higher layer parameter resourceType being set to 'periodic' may indicate that the SRS resource corresponds to periodic SRS (periodic).

One or multiple SRS resources in one SRS resource set need not be expected to correspond to different time domain behaviors. For example, one or multiple SRS resources in one SRS resource set need not be expected to be configured with different time domain behaviors. SRS resources and associated SRS resource sets need not be expected to be configured with different time domain behaviors.

In one carrier, one or multiple OFDM symbols need not be expected to be configured to overlap between the first SRS resource and the second SRS resource. For example, the first SRS resource may be configured by the higher layer parameter SRS-PosResource. The second SRS resource may be configured by the higher layer parameter SRS-Resource. For both the first SRS resource and the second SRS resource, resourceType may be 'periodic'.

Transmission of the first SRS need not be expected to be triggered or activated. For example, the first SRS may be an SRS in one or multiple OFDM symbols. The one or multiple OFDM symbols may overlap between the first SRS resource and the second SRS resource. For example, the first SRS resource may be configured by the higher layer parameter SRS-PosResource. The second SRS resource may be configured by the higher layer parameter SRS-Resource. For both the first SRS resource and the second SRS resource, resourceType may be 'semi-persistent' or 'aperiodic'.

In one carrier, multiple OFDM symbols need not be expected to be configured to overlap with multiple SRS resources. The multiple SRS resources may be configured by the higher layer parameter SRS-PosResource in which, for the multiple SRS resources, resourceType is 'periodic'.

In one carrier, transmission of the SRS in multiple OFDM symbols need not be expected to be triggered or activated. The multiple OFDM symbols may be OFDM symbols overlapping with the multiple SRS resources. The multiple SRS resources may be configured by the higher layer parameter SRS-PosResource in which, for the multiple SRS resources, resourceType is 'semi-persistent' or 'aperiodic'.

For the PUCCH and the SRS in one carrier, the terminal apparatus 1 need not transmit the SRS in a case that the first SRS is configured. The first SRS may be configured in the same OFDM symbol as the PUCCH. The PUCCH may carry only a CSI report. The PUCCH may carry only an L1-RSRP report. The PUCCH may carry only an L1-SINR report. The terminal apparatus 1 need not transmit the SRS in a case that transmission of the second SRS is configured or triggered. The second SRS may be either a semi-persistent SRS or a periodic SRS configured to be transmitted in the same OFDM symbol as the PUCCH. The second SRS may be an aperiodic SRS triggered to be transmitted in the same OFDM symbol as the PUCCH. The PUCCH may carry some or all of HARQ-ACK, a link recovery request, and a scheduling request (SR). In a case that the SRS is not transmitted due to overlap with the PUCCH, only SRS symbols overlapping with PUCCH symbols may be dropped. In a case that $N^{SRS}_{ap}$ is 8, the SRS symbol overlapping with the PUCCH symbol and the SRS symbol not overlapping with the PUCCH symbol may be dropped. In a case that the aperiodic SRS is triggered to be transmitted to overlap with the PUCCH, the PUCCH need not be transmitted.

In a case that one SRS resource corresponding to resourceType set to 'aperiodic' is triggered in one or multiple OFDM symbols in which transmission of the periodic or semi-persistent SRS is configured, the terminal apparatus 1 may transmit the aperiodic SRS resource and the periodic or semi-persistent SRS in the overlapping OFDM symbol may be dropped. The periodic or semi-persistent SRS in the non-overlapping OFDM symbol may be transmitted. In a case that $N^{SRS}_{ap}$ is 8, the periodic or semi-persistent SRS in the non-overlapping OFDM symbol may be dropped. Being dropped may include not being transmitted. In a case where the SRS resource corresponding to resourceType set to 'semi-persistent' is triggered in one or multiple OFDM symbols in which periodic SRS transmission is configured, the terminal apparatus 1 may transmit the semi-persistent SRS resource and the periodic SRS in the overlapping OFDM symbol may be dropped. The periodic SRS in the non-overlapping OFDM symbol may be transmitted. In a case that $N^{SRS}_{ap}$ is 8, the periodic or semi-persistent SRS in the overlapping OFDM symbol set may be dropped.

In a case that the spatial relationship (spatialRelationInfo) is activated or updated for the first SRS resource, the spatial relationship may be applied to the second SRS resource. The first SRS resource may be a semi-persistent SRS resource or an aperiodic SRS resource. The second SRS resource may be a semi-persistent SRS resource or an aperiodic SRS resource with a same SRS resource ID. The second SRS resource may be a semi-persistent SRS resource or an aperiodic SRS resource with the same SRS resource ID for all BWPs in the determined multiple CCs. The first SRS resource may be configured by the higher layer parameter. The spatial relationship may be activated or updated by the MAC CE for multiple CCs (component carriers) or/and multiple sets of BWPs. The list of multiple CCs may be determined by a higher layer parameter. The higher layer parameter may be simultaneousSpatial-UpdatedList1 or simultaneous-Spatial-UpdatedList2.

For one SRS resource, the number of repetitions (repetition factor) $R_{fac}$ may be configured for one SRS resource. The number of repetitions may be configured by the higher layer parameter. The number of repetitions may be any one of 1, 2, and 4. The number of repetitions may be any one of 1, 2, 3, 4, 5, 6, 7, 8, 10, 12, and 14. The number of repetitions $R_{fac}$ may be configured by the higher layer parameter resourceMapping in the higher layer parameter SRS-Resource. The number of repetitions $R_{fac}$ may be based on the DCI format. The number of repetitions may be less than or equal to $N^{SRS}_{symb}$.

The fact that the number of repetitions is the same as $N^{SRS}_{symb}$ may mean that frequency hopping is not configured. The fact that the number of repetitions is the same as $N^{SRS}_{symb}$ may mean that one of cyclic shift hopping and sequence hopping is not configured or neither of cyclic shift hopping and sequence hopping is configured. Each of the multiple antenna ports of one SRS resource may be mapped to the first set. For example, in a case that frequency hopping is not configured, each of the multiple antenna ports of one SRS resource in each slot may be mapped to the first set in all of the $N^{SRS}_{symb}$ OFDM symbols. The first set may be a set of one or multiple subcarriers. The first set may be a set of one or multiple subcarriers in the second set. The second set may be a set of one or multiple PRBs. For example, in a case that no frequency hopping is configured within one SRS resource in each slot, each of the multiple antenna ports of one SRS resource in each slot may be mapped to the first set in all of the $N^{SRS}_{symb}$ OFDM symbols.

One or multiple first antenna ports may correspond to a first cyclic shift (CS) set. For example, in a case that cyclic shift hopping is not configured, each of the one or multiple first antenna ports in each slot may correspond to the first CS set in all of the $N^{SRS}_{symb}$ OFDM symbols. The first CS set may be a set of cyclic shifts $\alpha i$ corresponding to the one or multiple first antenna ports pi. For example, in a case that no cyclic shift hopping is configured within one SRS resource in each slot, each of the one or multiple first antenna ports in each slot may correspond to the first CS set in all of the $N^{SRS}_{symb}$ OFDM symbols.

Further, in a case that frequency hopping is configured in one SRS resource in each slot and there is no repetition (the number of repetitions is 1), each of the antenna ports of one SRS resource in each slot may be mapped to a different set in each OFDM symbol. The set may be a set of one or multiple subcarriers. The same transmission comb value may be assumed for different sets.

Further, in a case that cyclic shift hopping is configured within one SRS resource in each slot and there is no repetition (the number of repetitions is 1), the one or more first antenna ports in each slot may be mapped to different CS sets in each OFDM symbol. The CS set may be a set of cyclic shifts $\alpha i$ corresponding to the one or multiple first antenna ports pi. The same transmission comb value may be assumed for different CS sets.

In a case that frequency hopping and repetition are configured, each of one or multiple antenna ports of one SRS resource may be mapped to the subcarriers included in the nth subcarrier set in the OFDM symbols included in the nth OFDM symbol set. The nth OFDM symbol set may be $R_{fac}$ pairs of R adjacent OFDM symbols. $R_{fac}$ may be the number of repetitions. The nth subcarrier set may include one or multiple subcarriers. n may be an integer larger than 1. For example, n may be $N^{SRS}_{symb} / R_{fac}$. The nth subcarrier set may include one or multiple subcarriers different from those of the subcarrier sets other than the nth subcarrier set. In a case that frequency hopping and repetition are configured within one SRS resource in each slot, each of the antenna ports of one SRS resource in each slot may be mapped to the same subcarrier set within each of the pairs of $R_{fac}$ OFDM symbols, and frequency hopping between the two pairs may follow the SRS frequency hopping pattern. The fact that the frequency hopping follows the SRS frequency hopping pattern may mean that the frequency hopping is applied, performed, or configured.

In a case that cyclic shift hopping and repetition are configured, one or multiple antenna ports (SRS ports) may correspond to the nth cyclic shift in the OFDM symbols included in the nth OFDM symbol set. The nth OFDM symbol set may be $R_{fac}$ pairs of R adjacent OFDM symbols. $R_{fac}$ may be the number of repetitions. The nth cyclic shift may be the nth CS set. n may be an integer larger than 1. For example, the maximum number of n may be $N^{SRS}_{symb} / R_{fac}$. In a case that cyclic shift hopping and repetition are configured within one SRS resource in each slot, each of the antenna ports of one SRS resource in each slot may correspond to the same cyclic shift within the pair of $R_{fac}$ OFDM symbols, and cyclic shift hopping between the two pairs may follow a cyclic shift hopping pattern. The fact that cyclic shift hopping follows the cyclic shift hopping pattern may mean that the cyclic shift frequency hopping is applied, performed, or configured. Whether to apply cyclic shift hopping may be configured by a higher layer parameter.

In a case that the number of antenna ports is 8, $N^{SRS}_{symb} / R_{fac}$ may be an even number. In a case that the number of antenna ports is 8, $N^{SRS}_{symb} / R_{fac}$ may be greater than or equal to 2. In a case that the number of antenna ports is 8, the first antenna port set and the second antenna port set may be determined. The antenna port set may include four antenna ports. The first subcarrier set to which the first antenna port set is mapped in the first OFDM symbol may be the same as the second subcarrier set to which the second antenna port set is mapped in the second OFDM symbol. The first OFDM symbol may be different from the second OFDM symbol. In a case that the number of antenna ports is 8, cyclic shift hopping may be applied.

For example, each of the antenna ports included in the first antenna port set of one SRS resource may be mapped to the first subcarrier set in the first OFDM symbol included in the first OFDM symbol set. Each of the antenna ports included in the second antenna port set may be mapped to the first subcarrier set in the second OFDM symbol included in the first OFDM symbol set. Each of the antenna ports included in the first antenna port set may be mapped to the second subcarrier set in the first OFDM symbol included in the second OFDM symbol set. Each of the antenna ports included in the second antenna port set may be mapped to the second subcarrier set in the second OFDM symbol included in the second OFDM symbol set. The mapping switching from the first subcarrier set to the second subcarrier set may be referred to as frequency hopping. In other words, in a case that the number of antenna ports is 8, frequency hopping may be applied to every $N^{SRS}_{symb} / R_{fac}$ OFDM symbol. The OFDM symbol set may include two or more OFDM symbols. The subcarrier set may include one or multiple subcarriers. The antenna port set may include four antenna ports.

For example, in a case that the number of antenna ports is four or less, the first hopping frequency (first SRS hopping pattern) may be applied. In a case that the number of antenna ports is 8, the second hopping frequency (second SRS hopping pattern) may be applied. The first SRS hopping pattern may be different from the second SRS hopping pattern.

Aperiodic SRS resources with intra-slot frequency hopping within one BWP may be configured. In a case that the number of repetitions is 1 and frequency hopping is configured, a full hopping bandwidth may be sounded in equal-size subbands over $N^{SRS}_{symb}$ symbols. The full hopping bandwidth may be sounded in subbands of the same size across the two pairs. Each of the two pairs may include $R_{fac}$ adjacent OFDM symbols. Each of the antenna ports of the SRS resources may be mapped to the same set subcarrier set within each OFDM symbol set. The OFDM symbol set may be a pair of $R_{fac}$ adjacent OFDM symbols. The subcarrier set may be a set of one or multiple subcarriers. The pair of $R_{fac}$ adjacent OFDM symbols may include resource OFDM symbols.

A periodic or semi-persistent SRS resource with inter-slot hopping or intra-slot hopping within one BWP may be configured. The SRS resource may occupy the same OFDM symbol position in each slot. The SRS resource of N symbols may occupy the same OFDM symbol position in each slot. In a case that $N^{SRS}_{symb}$ is 4, the number of repetitions is 2, and frequency hopping is configured, intra-slot hopping and inter-slot hopping may be supported on each of the multiple antenna ports. Each of the multiple antenna ports may be mapped to a different subcarrier set across the two pairs in each slot. Each of the two pairs may include $R_{fac}$ adjacent OFDM symbols. Each of the antenna ports of the SRS resources may be mapped to the same subcarrier set within each pair. A first portion of the antenna ports of the SRS resource may be mapped to the first subcarrier set within each pair. A second portion of the antenna ports of the SRS resource may be mapped to the second subcarrier set within each pair.

A periodic or semi-persistent SRS resource with cyclic shift hopping within one BWP may be configured. The SRS resource may occupy the same OFDM symbol position in each slot. The SRS resource of N symbols may occupy the same OFDM symbol position in each slot. In a case that $N^{SRS}_{symb}$ is 4, the number of repetitions is 2, and cyclic shift hopping is configured, then the one or multiple antenna ports may correspond to different CS sets across the two pairs in each slot. Each of the two pairs may include $R_{fac}$ adjacent OFDM symbols. The one or multiple antenna ports may be mapped to the same CS set within each pair. A first portion of the antenna ports of the SRS resource may be mapped to the first CS set within each pair. A second portion of the antenna ports of the SRS resource may be mapped to the second CS set within each pair.

The SRS resource may be configured by a higher layer parameter. For example, the higher layer parameter may be SRS-Resource. For example, the higher layer parameter may be SRS-PosResource. The number of antenna ports may be determined for the SRS resource. The number of continuous OFDM symbols may be determined for the SRS resource. A time domain starting position may be determined for the SRS resource. A frequency domain starting position may be determined for the SRS resource. The number of combs may be determined for the SRS resource. A maximum number of cyclic shifts may be determined for the SRS resource. The length of an SRS sequence may be determined for the SRS resource.

The SRS resource may include one or multiple elements. The one or multiple elements may be some or all of the number of antenna ports $N^{SRS}_{ap}$, the number of continuous OFDM symbols $N^{SRS}_{symb}$, the time domain starting position $l_0$, and the frequency domain starting position $k_0$. The number of antenna ports $N^{SRS}_{ap}$ may be the number of antenna ports for the SRS. For example, the number of antenna ports $N^{SRS}_{ap}$ may be provided by the first higher layer parameter. The first higher layer parameter may be nrofSRS-Ports. The number of antenna ports $N^{SRS}_{ap}$ may be any one of 1, 2, 4, and 8. The antenna port pi may be determined based at least on the number of antenna ports $N^{SRS}_{ap}$. For example, i may be a value from 0 to $N^{SRS}_{ap}$ - 1, and the antenna port pi may be i + 1000. The antenna port pi may be determined based at least on whether the number of antenna ports $N^{SRS}_{ap}$ is given by the first higher layer parameter. In a case that the first higher layer parameter is not provided, the number of antenna ports $N^{SRS}_{ap}$ may be 1. The antenna port may be any one of 1000, 1001, 1002, 1003, 1004, 1005, 1006, and 1007.

The number of continuous OFDM symbols $N^{SRS}_{symb}$ may be any one of 1, 2, 4, 8 and 12. For example, the number $N^{SRS}_{symb}$ of continuous OFDM symbols may be determined by a higher layer parameter. The higher layer parameter may be nrofSymbols. The higher layer parameter may be a higher layer parameter resourceMapping including a field of nrofSymbols.

The time domain starting position $l_0$ may be given by $N^{slot}_{symb}$ - 1 - $l_{offset}$. The offset $l_{offset}$ may be an integer from 0 to 13. The offset $l_{offset}$ may be counted backwards from the end of the slot. The offset $l_{offset}$ may be determined by a higher layer parameter. The higher layer parameter may be resourceMapping. The higher layer parameter may include a field of startPosition. $l_{offset}$ may be greater than or equal to $N^{SRS}_{symb}$ - 1.

A sounding reference signal sequence (SRS sequence) may be generated. For example, one SRS sequence may be generated for one SRS resource. One SRS sequence $r^{(pi)}(n, l')$ may be generated according to some or all of Math. 1, Math. 2, Math. 3, and Math. 4.

[Math. 1]

$$r^{(p_i)}(n, l') = r^{(\alpha_i, \delta)}_{u,v}(n) e^{j\alpha' l''}$$

[Math. 2]

$$r^{(\alpha, \delta)}_{u,v}(n) = e^{j\alpha n} \bar{r}_{u,v}(n)$$

[Math. 3]

$$\bar{r}_{u,v}(n) = x_q(n \bmod N_{ZC})$$

[Math. 4]

$$x_q(m) = e^{-j\frac{\pi q m(m+1)}{N_{ZC}}}$$

n in Math. 1 may be greater than or equal to 0 and may be less than or equal to $M^{SRS}{}_{SC, b}$ - 1. $M^{SRS}{}_{SC, b}$ may be the number of subcarriers. $M^{SRS}{}_{SC, b}$ may be the length of the SRS sequence. The index l' of the OFDM symbol may be an index from 0 to $N^{SRS}{}_{symb}$ - 1. $\delta$ in Math. 1 may be $\log_2(K_{TC})$. The number of combs $K_{TC}$ may be any value of 2, 4 or 8. The number of combs $K_{TC}$ may be determined by a higher layer parameter. For example, the higher layer parameter may be transmissionComb.

u in Math. 1, Math. 2, and Math. 3 may be a group number. v in Math. 1, Math. 2, and Math. 3 may be a base sequence number in one group. The group number may be an integer from 0 to 29. One group number may correspond to one group. One base sequence number may correspond to one base sequence. q in Math. 4 may be determined based on at least the group number u and the base sequence number v. $N_{ZC}$ may be the largest prime number less than a certain value. For example, the certain number may be $M^{SRS}{}_{SC, b}$.

The cyclic shift $\alpha i$ may be a cyclic shift for antenna port pi. For example, the antenna port pi and the cyclic shift $\alpha i$ may be determined for each i. The cyclic shift $\alpha i$ may be determined according to Math. 5.

$\alpha'$ may be the initial cyclic shift value. In a case that cyclic shift hopping is not applied, $\alpha'$ may be 0. For example, the initial cyclic shift value may be determined by the DCI format. The initial cyclic shift value may be $2\pi R_{fac} / N^{SRS}{}_{symb}$. For example, in a case that cyclic shift hopping is applied, the initial cyclic shift value may be determined based on one or both of $R_{fac}$ and $N^{SRS}{}_{symb}$.

The index l" may be l'. l" may be floor(l' / $R_{fac}$). For example, the l" may be {0, 1, ..., $N^{SRS}{}_{symb} / R_{fac}$ - 1}. That is, l" may be an index for the time domain.

[Math. 5]

$$\alpha_i = 2\pi \frac{n^{CS,i}_{SRS}}{n^{CS,max}_{SRS}}$$

The maximum number (maximum value) of cyclic shifts $n^{CS, max}{}_{SRS}$ may be determined based on the number of combs $K_{TC}$. For example, in a case that $K_{TC}$ is 2, $n^{CS, max}{}_{SRS}$ may be 8. For example, in a case that $K_{TC}$ is 4, $n^{CS, max}{}_{SRS}$ may be 12. For example, in a case that $K_{TC}$ is 8, $n^{CS, max}{}_{SRS}$ may be 6. $n^{CS, i}{}_{SRS}$ may be determined by any one of Math. 6, Math. 7, and Math. 8.

[Math. 6]

$$n^{CS,i}_{SRS} = \left( n^{CS}_{SRS} + \frac{n^{CS,max}_{SRS} \lfloor (p_i - 1000)/2 \rfloor}{N^{SRS}_{ap}/2} \right) \bmod n^{CS,max}_{SRS}$$

[Math. 7]

$$n^{CS,i}_{SRS} = \left( n^{CS}_{SRS} + \frac{n^{CS,max}_{SRS} \lfloor (p_i - 1000)/4 \rfloor}{N^{SRS}_{ap}/4} \right) \bmod n^{CS,max}_{SRS}$$

[Math. 8]

$$n_{SRS}^{CS,i} = \left( n_{SRS}^{CS} + \frac{n_{SRS}^{CS,max}(p_i - 1000)}{N_{ap}^{SRS}} \right) \bmod n_{SRS}^{CS,max}$$

For example, in a case that condition 1 is satisfied, $n^{CS,\ i}_{SRS}$ may be determined according to Math. 6. For example, condition 1 may be that the number of antenna ports $N^{SRS}_{ap}$ is 4 and the maximum number of cyclic shifts $n^{CS,\ max}_{SRS}$ is 6. Condition 1 may be that the number of antenna ports $N^{SRS}_{ap}$ is 8 and the maximum number of cyclic shifts $n^{CS,\ max}_{SRS}$ is 12. Condition 1 may be that the number of antenna ports $N^{SRS}_{ap}$ is 8 and the maximum number of cyclic shifts $n^{CS,\ max}_{SRS}$ is 8. For example, in a case that condition 2 is satisfied, $n^{CS,\ i}_{SRS}$ may be determined according to Math. 7. Condition 2 may be that the number of antenna ports $N^{SRS}_{ap}$ is 8. Condition 2 may be that the number of antenna ports $N^{SRS}_{ap}$ is 8 and the maximum number of cyclic shifts $n^{CS,\ max}_{SRS}$ is 6. Condition 2 may be that the number of antenna ports $N^{SRS}_{ap}$ is 8 and the maximum number of cyclic shifts $n^{CS,\ max}_{SRS}$ is 12. For example, in a case that condition 1 is satisfied and condition 2 is satisfied, $n^{CS,\ i}_{SRS}$ may be determined according to Math. 6. In a case that condition 1 is satisfied and condition 2 is satisfied, $n^{CS,\ i}_{SRS}$ may be determined according to Math. 7. In a case that condition 1 is not satisfied and condition 2 is not satisfied, $n^{CS,\ i}_{SRS}$ may be determined according to Math. 8. Condition 2 may be omitted. For example, $n^{CS,\ i}_{SRS}$ may be determined according to one of Math. 6 and Math. 8.

$n^{CS}_{SRS}$ may be referred to as an initial cyclic shift value. $n^{CS}_{SRS}$ may be an integer from 0 to $n^{CS,\ max}_{SRS}$ - 1. $n^{CS}_{SRS}$ may be determined by a higher layer parameter. The higher layer parameter may be transmissionComb. $n^{CS}_{SRS}$ may be determined based on the higher layer parameter transmissionComb and whether cyclic shift hopping is applied. The initial cyclic shift value is a value that does not depend on the antenna port and may be a value for determining the cyclic shift $\alpha_i$ or $n^{CS,i}_{SRS}$.

The initial cyclic shift value may be determined based at least on some or all of the higher layer parameter transmissionComb, the number of continuous OFDM symbols $N^{SRS}_{symb}$, the number of repetitions $R_{fac}$, and the maximum number of cyclic shifts $n^{CS,\ max}_{SRS}$. Whether to apply cyclic shift hopping may be configured by a higher layer parameter. In a case that cyclic shift hopping is not applied, the initial cyclic shift value may be determined based on the higher layer parameter transmissionComb. In a case that cyclic shift hopping is applied, the initial cyclic shift value may be determined based at least on some or all of the higher layer parameter transmissionComb, the number of continuous OFDM symbols $N^{SRS}_{symb}$, the number of repetitions $R_{fac}$, and the maximum number of cyclic shifts $n^{CS,\ max}_{SRS}$.

The initial cyclic shift value may be determined based at least on some or all of the number of continuous OFDM symbols $N^{SRS}_{symb}$, the number of repetitions $R_{fac}$, and the maximum number of cyclic shifts $n^{CS,\ max}_{SRS}$. For example, in a case that cyclic shift hopping is not applied, the initial cyclic shift value may be 0. In a case that cyclic shift hopping is applied, the initial cyclic shift value may be determined based at least on some or all of the number of continuous OFDM symbols $N^{SRS}_{symb}$, the number of repetitions $R_{fac}$, and the maximum number of cyclic shifts $n^{CS,\ max}_{SRS}$. For example, the initial cyclic shift value may be increased by $n^{CS'}$ for each symbol index l". $n^{CS}_{SRS}$ may be the sum of $n^{CS}$l" and a value provided by the higher layer parameter transmissionComb.

The initial cyclic shift value may be determined based at least on the DCI format. For example, in a case that cyclic shift hopping is not applied, the initial cyclic shift value may be 0. In a case that cyclic shift hopping is applied, the initial cyclic shift value may be determined based at least on the DCI format. For example, $n^{CS}_{SRS}$ may be the sum of the initial cyclic shift value and a value provided by the higher layer parameter transmissionComb.

One or both of the cyclic shift $\alpha_i$ and the initial cyclic shift value may be determined, updated, or changed for every first number of OFDM symbols. The first number of OFDM symbols may be one symbol. The first number of OFDM symbols may be the number of repetitions $R_{fac}$. The first number of OFDM symbols may be determined by the DCI format. For example, one or both of the cyclic shift $\alpha_i$ and the initial cyclic shift value may be functions of the index l' of the OFDM symbol. For example, the cyclic shift (the value of the cyclic shift) may be determined based at least on l" = floor(l' / $R_{fac}$).

The sequence number u may be determined based at least on the index l' of the OFDM symbol. The sequence number u may be determined based on at least $n^{SRS}_{ID}$ which is a sequence ID (SRS sequence ID). For example, the sequence group may be changed (hopped) according to the index l' of the OFDM symbol. The index l' of the OFDM symbol may correspond to the antenna port pi. For example, an index of an OFDM symbol may be determined according to an index i.

The sequence ID may be determined based at least on one or both of the number of continuous OFDM symbols $N^{SRS}_{symb}$ and the number of repetitions $R_{fac}$. The sequence ID may be changed for each symbol for the number of repetitions $R_{fac}$ symbol.

The SRS may be transmitted in the SRS resource. In a case that the SRS is transmitted in the SRS resource, an SRS sequence $r^{(pi)}(n, l')$ corresponding to each OFDM symbol l' or each antenna port of the SRS resource may be multiplexed. For example, the start of the SRS sequence $r^{(pi)}(0, l')$ may be mapped to a resource element(k, l) in a certain slot for each antenna port pi. For example, based at least on the antenna port pi, the start of the SRS sequence $r^{(pi)}(0, l')$ may be mapped to the resource element(k, l) in the certain slot or may be mapped to a resource element(k, l+1) in the certain slot. In other words, the SRS sequence may be mapped to a physical resource. The SRS sequence $r^{(pi)}(k', l')$ may be mapped to the resource element according to Math. 9. Alternatively, 0 may be mapped to the resource element.

[Math. 9]

$$\alpha^{(p_i)}_{K_{TC}k'+k_0^{(p_i)},l'+l_0} = \frac{1}{\sqrt{N_{ap}}}\beta_{SRS}r^{(p_i)}(k',l')$$

$\beta_{SRS}$ may be a scaling factor (Scaling factor or Amplitude scaling factor). The length $M^{SRS}_{SC, b}$ of the SRS sequence may be determined based on at least the number of combs $K_{TC}$ and the number of subcarriers $N^{RB}_{SC}$ included in one resource block.

The frequency position $K_{TC}k' + k^{(pi)}_0$ of the resource element may differ depending on the antenna port pi. The frequency position $K_{TC}k' + k^{(pi)}_0$ may be one or multiple subcarriers. The frequency position $K_{TC}k' + k^{(pi)}_0$ may be one subcarrier set. For example, $k^{(pi)}_0$ may be determined based at least on the antenna port pi. $k^{(pi)}_0$ may be determined based at least on $k^{(pi)}_{TC}$. $k^{(pi)}_{TC}$ may be determined by any one of Math. 10 and Math. 11.

[Math. 10]

$$k^{(p_i)}_{TC} = k^{bar}_{TC} + \frac{K_{TC}}{2} \bmod K_{TC}$$

[Math. 11]

$$k^{(p_i)}_{TC} = k^{bar}_{TC} + \frac{K_{TC}}{4} \bmod K_{TC}$$

For example, in a case that condition 3 is satisfied, $k^{(pi)}_{TC}$ may be determined according to Math. 10. For example, condition 3 may be that the number of antenna ports $N^{SRS}_{ap}$ is 4, the maximum number of cyclic shifts $n^{CS, max}_{SRS}$ is 6, and the antenna port pi is either of {1001, 1003}. Condition 3 may be that the number of antenna ports $N^{SRS}_{ap}$ is 4, the maximum number of cyclic shifts $n^{CS, max}_{SRS}$ is a value from $n^{CS, max}_{SRS}$ / 2 to $n^{CS, max}_{SRS}$ - 1, and the antenna port pi is either of { 1001, 1003}. For example, in a case that condition 3 is not satisfied, $k^{(pi)}_{TC}$ may be $k^{bar}_{TC}$. A comb number offset $k^{bar}_{TC}$ may be determined by a higher layer parameter. The higher layer parameter may be transmissionComb.

For example, in a case that condition 4 is satisfied, $k^{(pi)}_{TC}$ may be determined according to Math. 11. For example, condition 4 may include at least the number of antenna ports $N^{SRS}_{ap}$ being 8. For example, condition 4 may include at least the antenna port pi being any one of {1001, 1003, 1005, 1007}. For example, the condition 4 may include at least the antenna port pi being any one of {1000, 1001, 1002, 1003}. Condition 4 may include $n^{CS, max}_{SRS}$ being 6. Condition 4 may include $n^{CS, max}_{SRS}$ being 12. For example, condition 4 may be that the number of antenna ports $N^{SRS}_{ap}$ is 8, that $n^{CS, max}_{SRS}$ is 6, and that the antenna port pi is any one of {1001, 1003, 1005, 1007}.

The SRS sequence may be determined based at least on the first sequence. For example, the first sequence may be a vector including some or all of the values +1, -1, +j, and -j. j may be an imaginary number. For example, the first sequence may be a vector including one or both of the values +1 and -1. The length N of the vector may be either 2 or 4. The length N of the vector may be the number of subcarriers. The first sequence may be a matrix including some or all of the values +1, -1, +j, and -j. The first sequence may be a matrix including one or both of the values +1 and -1. For example, the matrix may include two rows and N columns. The matrix may include N rows and two columns. For example, the first sequence corresponding to the index k' may be applied to the second sequence corresponding to the index k. For example, the second sequence corresponding to the index k and the first sequence corresponding to the index k' may be multiplied. The index k' may be floor(kN / $M^{SRS}_{SC, b}$). The index k' may be mod(k, N). For example, the first sequence corresponding to index k' and index l' may be applied to the third sequence corresponding to index k and index l. For example, the third sequence corresponding to the index k and the index l may be multiplied by the first sequence corresponding to the index k' and the index l'. The index l' may be floor(l * 2 / $N^{SRS}_{symb}$). The index l' may be mod(l, 2). The "*" may represent multiplication. The SRS sequence may be determined based at least on the first sequence. The SRS sequence may be determined based at least on the second sequence.

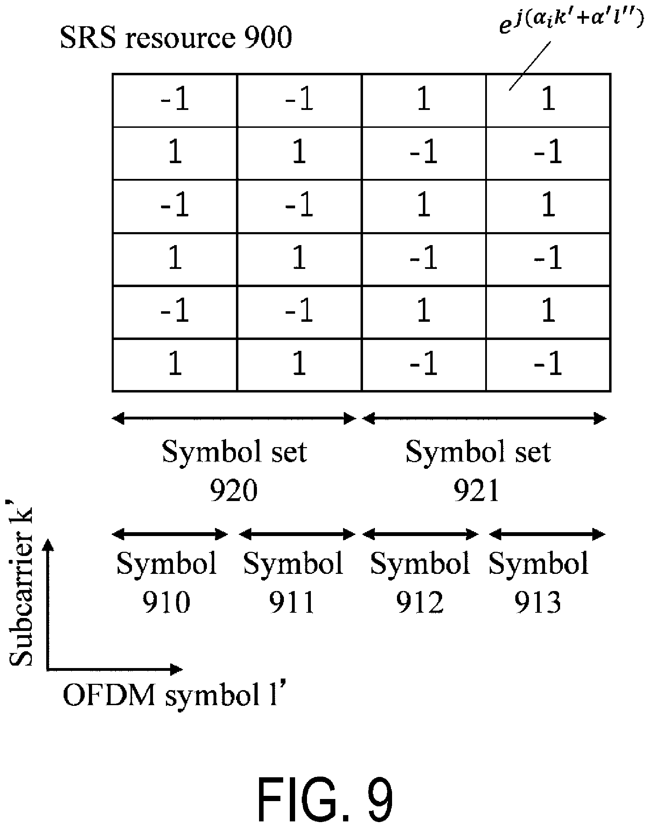

FIG. 9 is a diagram illustrating an example of cyclic shift hopping for the SRS according to an aspect of the present embodiment. An SRS resource 900 may be determined in one slot. The SRS resource 900 may be transmitted. An SRS corresponding to the SRS resource 900 may be transmitted. The SRS may be transmitted in the SRS resource 900. An SRS resource set corresponding to SRS resource 900 may be transmitted. The SRS resource 900 may be associated with an aperiodic SRS. The SRS resource 900 may be associated with a periodic SRS. The SRS resource 900 may be associated with a semi-persistent SRS. In other words, resourceType of the SRS resource 900 may be set to 'aperiodic', 'semi-persistent', or 'periodic'. The SRS resource 900 to which one or multiple SRS sequences are mapped may be transmitted. The SRS resource 900 to which one or multiple SRSs are mapped may be transmitted. The SRS resource 900 may be indicated by an SRI in the DCI. The SRS resource 900 may be identified by the SRI. The SRS resource 900 may be indicated by a higher layer parameter. For example, the higher layer parameter may be srs-ResourceIndicator or srs-ResourceIndicator2. usage of the SRS resource set associated with the SRS resource 900 may be 'codebook '. usage of the SRS resource set associated with the SRS resource 900 may be 'nonCodebook '. The SRS resource 900 may include one, two, four, or eight ports. For example, the SRS ports in SRS resource 900 may be indexed as pi = 1000 + i. The SRS resource (resource) 900 may be one of K SRS resources included in one SRS resource set. One or multiple SRS parameters for the SRS resource 900 may be configured. For example, one or multiple SRS parameters may be configured by SRS-Resource or SRS-PorResource corresponding to the SRS resource 900. The SRS resource 900 may be a target SRS resource. The SRS resource 900 may be configured by a higher layer parameter. For example, the SRS resource 900 may be configured in one serving cell and/or one uplink BWP. The SRS resource 900 may include one spatial domain filter.

The SRS may be transmitted in the SRS resource 900. The SRS sequence may be mapped to resource elements. For example, in a case that the SRS is transmitted in the SRS resource 900, the sequence (SRS sequence) corresponding to each OFDM symbol and each antenna port may be mapped to the resource elements (physical resource). The SRS resource 900 may be used for SRS transmission. One block (a block labeled as "1" or "-1") in FIG. 9 may be one resource element. That is, the horizontal axis in FIG. 9 may be an OFDM symbol index l'. The vertical axis in FIG. 9 may be a subcarrier index k'. The vertical axis in FIG. 9 may be an index for the length of the SRS sequence.

The number of continuous OFDM symbols $N^{SRS}_{symb}$ for the SRS resource 900 may be 4. The SRS resource 900 may include at least an OFDM symbol 910, an OFDM symbol 911, an OFDM symbol 912, and an OFDM symbol 913. The SRS resource 900 may occupy at least the OFDM symbol 910, the OFDM symbol 911, the OFDM symbol 912, and the OFDM symbol 913. The OFDM symbol 910, the OFDM symbol 911, the OFDM symbol 912, and the OFDM symbol 913 may be adjacent OFDM symbols.

The number of repetitions (repetition factor) $R_{fac}$ for the SRS resource 900 may be 2. The OFDM symbol set 920 may include the OFDM symbol 910 and the OFDM symbol 911. The OFDM symbol set 921 may include the OFDM symbol 912 and the OFDM symbol 913. The OFDM symbol set 920 and the OFDM symbol set 921 may each include $R_{fac}$ OFDM symbols.

The number of subcarriers for the SRS resource 900 may be $M^{SRS}_{SC, b}$. In FIG. 9, $M^{SRS}_{SC, b}$ may be 6. In FIG. 9, the length of the SRS sequence may be 6.

For example, up to eight SRS sequences may be mapped to the SRS resource 900. For example, up to eight SRS sequences may be multiplexed in the SRS resource 900.

For example, some or all of the following may be mapped to the SRS resource 900: a first SRS sequence, a second SRS sequence, a third SRS sequence, a fourth SRS sequence, a fifth SRS sequence, a sixth SRS sequence, a seventh SRS sequence, and an eighth SRS sequence. The first SRS sequence may be determined based at least on the first antenna port. The second SRS sequence may be determined based at least on the second antenna port. The third SRS sequence may be determined based at least on the third antenna port. The fourth SRS sequence may be determined based at least on the fourth antenna port. The fifth SRS sequence may be determined based at least on the fifth antenna port. The sixth SRS sequence may be determined based at least on the sixth antenna port. The seventh SRS sequence may be determined based at least on the seventh antenna port. The eighth SRS sequence may be determined based at least on the eighth antenna port.

For example, the first antenna port may be 1000. For example, the second antenna port may be 1001. For example, the third antenna port may be 1002. For example, the fourth antenna port may be 1003. For example, the fifth antenna port may be 1004. For example, the sixth antenna port may be 1005. For example, the seventh antenna port may be 1006. For example, the eighth antenna port may be 1007. For example, the first antenna port may be 1000. For example, the second antenna port may be 1002. For example, the third antenna port may be 1004. For example, the fourth antenna port may be 1006. For example, the fifth antenna port may be 1001. For example, the sixth antenna port may be 1003. For example, the seventh antenna port may be 1005. For example, the eighth antenna port may be 1007.

The first SRS sequence may be determined based at least on a 1_1st cyclic shift or a 1_2nd cyclic shift. The second SRS sequence may be determined based at least on a 2_1st cyclic shift or a 2_2nd cyclic shift. The third SRS sequence may be determined based at least on a 3_1st cyclic shift or a 3_2nd cyclic shift. The fourth SRS sequence may be determined based at least on a 4_1st cyclic shift or a 4_2nd cyclic shift. The fifth SRS sequence may be determined based at least on a 5_1st cyclic shift or a 5_2nd cyclic shift. The sixth SRS sequence may be determined based at least on a 6_1st cyclic shift or a 6_2nd cyclic shift. The seventh SRS sequence may be determined based at least on a 7_1st cyclic shift or a 7_2nd cyclic shift. The eighth SRS sequence may be determined based at least on an 8_1st cyclic shift or an 8_2nd cyclic shift.

The first SRS sequence may be determined based at least on the 1_1st cyclic shift in the OFDM symbols included in the OFDM symbol set 920. The first SRS sequence may be determined based at least on the 1_2nd cyclic shift in the OFDM symbols included in the OFDM symbol set 921. The nth SRS sequence may be determined based at least on the n_1st cyclic shift in the OFDM symbols included in the OFDM symbol set 920. The nth SRS sequence may be determined based at least on the n_2nd cyclic shift in the OFDM symbols included in the OFDM symbol set 921.

The value of "1" or "-1" in FIG. 9 may be a cyclic shift $\exp(j(\alpha i * k' + \alpha'l''))$. For example, $\alpha i$ in FIG. 9 may be $\pi$. $\alpha'$ may be the initial cyclic shift value. $\alpha'$ may be $\pi$. l'' may be an index for of the OFDM symbol set. For example, l'' = 0 may correspond to the OFDM symbol set 920. For example, l'' = 1 may correspond to the OFDM symbol set 921.

The problem is that although the SRS may be used to measure the channel quality, the SRS of the terminal apparatus may interfere with the SRS of another terminal apparatus, thus affecting the measurement of the channel quality. Thus, one or both of solution 1 and solution 2 may be used to dynamically change the parameter for the SRS and suppress the influence of the interference.

The terminal apparatus 1 may include a generator. For example, the generator may generate a baseband signal. The generator may generate an SRS sequence (SRS signal, SRS). A transmitter in the terminal apparatus 1 may transmit the SRS. That is, the transmitter in the terminal apparatus 1 may transmit the SRS resource.

The SRS sequence may be mapped to the SRS resource. The SRS resource may include at least a first number of OFDM symbols. For example, the first number of OFDM symbols may be $N^{SRS}_{symb}$.

The SRS sequence may be determined based at least on the cyclic shift. The cyclic shift may be $\alpha i$. The cyclic shift may be determined based at least on the initial cyclic shift value. For example, the initial cyclic shift value may be included in an equation for determining $n^{CS,i}_{SRS}$. The initial cyclic shift value may be $n^{CS}_{SRS}$. The initial cyclic shift value may be determined for every second number of OFDM symbols. That is, the cyclic shift may be determined, updated, or changed for every second OFDM symbol.

For example, the initial cyclic shift value may be increased by the first value $n^{CS'}$ for every second number of OFDM symbols. The initial cyclic shift value may be included, as $n^{CS'}$ or l''$n^{CS'}$, in the equation for determining $n^{CS,i}_{SRS}$. For example, in a case that the initial cyclic shift value at l'' = 0 is 0, the initial cyclic shift value at l'' = 1 may be $n^{CS'}$. For example, the initial cyclic shift value at l'' may be $\mathrm{mod}(l''n^{CS'}, n^{CS,\,max}_{SRS})$. That is, the initial cyclic shift value may be determined based at least on the maximum number of cyclic shifts. $n^{CS'}$ may be 1. $n^{CS'}$ may be $n^{CS,\,max}_{SRS}R_{fac}/N^{SRS}_{symb}$. That is, the initial cyclic shift value may be determined based on at least one of the first number of OFDM symbols, the second number of OFDM symbols, or the maximum number of cyclic shifts. $n^{CS'}$ may be determined by the DCI format.

The SRS sequence may be determined based at least on the cyclic shift. The SRS sequence may be mapped to the SRS resource based on the initial cyclic shift value. The initial cyclic shift value may be $\alpha'$ or $\exp(j\alpha'l'')$. For example, the product of the SRS sequence and the phase rotation $\exp(j\alpha'l'')$ may be mapped to the SRS resource. For example, l'' may range from 0 to $N^{SRS}_{symb}/R_{fac} - 1$. $R_{fac}$ may be the second number of OFDM symbols. The initial cyclic shift value may be determined for each second OFDM symbol. Alternatively, phase rotation based on the initial cyclic shift value $\alpha'$ may be applied to the SRS sequence for each second OFDM symbol.

The SRS sequence may be determined based at least on the cyclic shift and the initial cyclic shift value. The cyclic shift may be $\alpha i$, and the initial cyclic shift value may be $\alpha'$. The SRS sequence may be determined for every second number of OFDM symbols. The SRS sequence may be determined, updated, or changed based on a first amount of change for every second number of OFDM symbols. The first amount of change may be determined based on both the first number of OFDM symbols and the second number of OFDM symbols.

In solution 1, the second number of OFDM symbols may be determined by a higher layer parameter. For example, the second number of OFDM symbols may be the number of repetitions $R_{fac}$. The initial cyclic shift value may be determined based on one or both of the first number of OFDM symbols and the second number of OFDM symbols. The initial cyclic shift value may be determined based on at least one of the first number of OFDM symbols or the second number of OFDM symbols.

In solution 2, the second number of OFDM symbols may be determined according to the DCI format. The initial cyclic shift value may be determined based on the DCI format. For example, one field included in the DCI format may indicate the second number of OFDM symbols. The initial cyclic shift value may be determined based at least on the second number of OFDM symbols.

In solution 2, the second number of OFDM symbols may be determined by a higher layer parameter. For example, the second number of OFDM symbols may be the number of repetitions $R_{fac}$. The initial cyclic shift value may be determined by the DCI format.

The terminal apparatus 1 may include a generator that generates an SRS sequence. The terminal apparatus 1 may include a transmitter that transmits the SRS resource to which the nth SRS sequence is mapped. The SRS sequence may be determined based at least on one or both of the cyclic shift and the initial cyclic shift value. The initial cyclic shift value may be determined for each second OFDM symbol. The SRS resource may be configured based at least on the first number of OFDM symbols. The second number of OFDM symbols may be less than or the same as the first number of OFDM symbols.

Various aspects of apparatuses according to an aspect of the present embodiment will be described below.
(1) In order to accomplish the object described above, an aspect of the present invention is contrived to provide the following means. Specifically, a first aspect of the present invention is a terminal apparatus including a generator configured to generate an SRS sequence, a transmitter configured to transmit an SRS resource to which the SRS sequence is mapped, and a radio resource control layer processing unit configured to receive a higher layer parameter, wherein the SRS resource includes at least a first number of OFDM symbols, the SRS sequence is determined based at least on a cyclic shift, the cyclic shift is determined based at least on an initial cyclic shift value, the initial cyclic shift value is determined for every second number of OFDM symbols, the second number of OFDM symbols is determined based on the higher layer parameter, and the second number of OFDM symbols is less than or the same as the first number of OFDM symbols. Further, the initial cyclic shift value may be determined based on at least one of the first number of OFDM symbols, the second number of OFDM symbols, or a maximum number of cyclic shifts for the SRS sequence. Alternatively, the terminal apparatus may include a receiver configured to receive a PDCCH to which a DCI format is mapped, and the initial cyclic shift value may be determined by the DCI format.

(2) A second aspect of the present invention is a base station apparatus including a receiver configured to receive an SRS resource to which an SRS sequence is mapped, and a radio resource control layer processing unit configured to transmit a higher layer parameter, wherein the SRS sequence is generated, the SRS resource includes at least a first number of OFDM symbols, the SRS sequence is determined based at least on a cyclic shift, the cyclic shift is determined based at least on an initial cyclic shift value, the initial cyclic shift value is determined for every second number of OFDM symbols, the second number of OFDM symbols is determined based on the higher layer parameter, and the second number of OFDM symbols is less than or the same as the first number of OFDM symbols. Further, the initial cyclic shift value may be determined based on at least one of the first number of OFDM symbols, the second number of OFDM symbols, or a maximum number of cyclic shifts for the SRS sequence. Alternatively, the base station apparatus may include a transmitter configured to transmit a PDCCH to which a DCI format is mapped, and the initial cyclic shift value may be determined by the DCI format.

A program running on the base station apparatus 3 and the terminal apparatus 1 according to an aspect of the present invention may be a program (a program that causes a computer to function) that controls a Central Processing Unit (CPU) and the like so as to implement the functions of the above-described embodiment according to an aspect of the present invention. The information handled in these apparatuses is temporarily loaded into a Random Access Memory (RAM) while being processed, is then stored in a Hard Disk Drive (HDD) and various types of Read Only Memory (ROM) such as a Flash ROM, and is read, modified, and written by the CPU, as necessary.

Note that the terminal apparatus 1 and the base station apparatus 3 according to the above-described embodiment may be partially implemented by a computer. In that case, this configuration may be implemented by recording a program for implementing such control functions on a computer-readable recording medium and causing a computer system to read the program recorded on the recording medium for execution.

Note that it is assumed that the "computer system" mentioned here refers to a computer system built into the terminal apparatus 1 or the base station apparatus 3, and the computer system includes an OS and hardware components such as peripheral devices. In addition, the "computer-readable recording medium" refers to a portable medium such as a flexible disk, a magneto-optical disk, a ROM, and a CD-ROM, and a storage apparatus such as a hard disk built into the computer system.

Moreover, the "computer-readable recording medium" may include a medium that dynamically stores a program for a short period of time, such as a communication line in a case that the program is transmitted over a network such as the Internet or over a communication line such as a telephone line, and may also include a medium that stores the program for a certain period of time, such as a volatile memory included in the computer system functioning as a server or a client in such a case. In addition, the above-described program may be one for implementing some of the above-described functions, and also may be one capable of implementing the above-described functions in combination with a program already recorded in a computer system.

Furthermore, the base station apparatus 3 according to the aforementioned embodiment may be implemented as an aggregation (apparatus group) including multiple apparatuses. Each of the apparatuses included in such an apparatus group may include a part or all of each function or each functional block of the base station apparatus 3 according to the aforementioned embodiment. As the apparatus group, it is only necessary to have all of functions or functional blocks of the base station apparatus 3. Moreover, the terminal apparatus 1 according to the aforementioned embodiment can also communicate with the base station apparatus as the aggregation.

Also, the base station apparatus 3 according to the aforementioned embodiment may be an Evolved Universal Terrestrial Radio Access Network (EUTRAN) and/or a NextGen RAN (NG-RAN or NR RAN). Moreover, the base station apparatus 3 according to the aforementioned embodiment may have a part or all of the functions of a higher node for an eNodeB and/or a gNB.

Also, a part or all portions of each of the terminal apparatus 1 and the base station apparatus 3 according to the aforementioned embodiment may be implemented as an LSI, which is typically an integrated circuit, or may be implemented as a chip set. The functional blocks of each of the terminal apparatus 1 and the base station apparatus 3 may be individually implemented as a chip, or a part or all of the functional blocks may be integrated into a chip. Furthermore, a circuit integration technique is not limited to the LSI and may be implemented with a dedicated circuit or a general-purpose processor. Moreover, in a case that a circuit integration technology that substitutes an LSI appears with the advance of the semiconductor technology, it is also possible to use an integrated circuit based on the technology.

In addition, although the aforementioned embodiments have described the terminal apparatus as an example of a communication apparatus, the present invention is not limited to such a terminal apparatus, and is also applicable to a terminal apparatus or a communication apparatus that is a stationary type or a non-movable type electronic apparatus installed indoors or outdoors, for example, such as an AV device, a kitchen device, a cleaning or washing machine, an air-conditioning device, office equipment, a vending machine, and other household appliances.

Although, the embodiments of the present invention have been described in detail above referring to the drawings, the specific configuration is not limited to the embodiments and includes, for example, design changes within the scope that do not depart from the gist of the present invention. For an aspect of the present invention, various modifications are possible within the scope of the claims, and embodiments that are made by suitably combining technical means disclosed according to the different embodiments are also included in the technical scope of the present invention. In addition, a configuration in which elements described in the respective embodiments and having mutually similar effects are substituted for one another is also included.

Industrial Applicability

An aspect of the present invention can be utilized, for example, in a communication system, communication equipment (for example, a cellular phone apparatus, a base station apparatus, a wireless LAN apparatus, or a sensor device), an integrated circuit (for example, a communication chip), or a program.

Reference Signs List

    1 (1A, 1B, 1C) Terminal apparatus
    3 Base station apparatus
    10, 30 Radio transmission and/or reception unit
    10a, 30a Radio transmission unit
    10b, 30b Radio reception unit
    11, 31 Antenna unit
    12, 32 RF unit
    13, 33 Baseband unit
    14, 34 Higher layer processing unit
    15, 35 Medium access control layer processing unit
    16, 36 Radio resource control layer processing unit
    91, 92, 93, 94 Search space set
    300 Component carrier
    301 Primary cell
    302, 303 Secondary cell
    700 Set of resource elements for PSS
    710, 711, 712, 713 Set of resource elements for PBCH and DMRS for PBCH
    720 Set of resource elements for SSS
    3000 Point
    3001, 3002 Resource grid
    3003, 3004 BWP
    3011, 3012, 3013, 3014 Offset
    3100, 3200 Common resource block set

900 SRS resource
910, 911, 912, 913 OFDM symbol
920, 921 OFDM symbol set

**Claims**

1. A terminal apparatus comprising:

   a generator configured to generate an SRS sequence;
   a transmitter configured to transmit an SRS resource to which the SRS sequence is mapped; and
   a radio resource control layer processing unit configured to receive a higher layer parameter, wherein
   the SRS resource includes at least a first number of OFDM symbols,
   the SRS sequence is determined based at least on a cyclic shift,
   the cyclic shift is determined based at least on an initial cyclic shift value,
   the initial cyclic shift value is determined for every second number of OFDM symbols,
   the second number of OFDM symbols is determined based on the higher layer parameter, and
   the second number of OFDM symbols is less than or the same as the first number of OFDM symbols.

2. The terminal apparatus according to claim 1, wherein the initial cyclic shift value is determined based on at least one of the first number of OFDM symbols, the second number of OFDM symbols, or a maximum number of cyclic shifts for the SRS sequence.

3. The terminal apparatus according to claim 1, comprising:

   a receiver configured to receive a PDCCH to which a DCI format is mapped, wherein
   the initial cyclic shift value is determined by the DCI format.

4. A base station apparatus comprising:

   a receiver configured to receive an SRS resource to which an SRS sequence is mapped; and
   a radio resource control layer processing unit configured to transmit a higher layer parameter, wherein
   the SRS sequence is generated,
   the SRS resource includes at least a first number of OFDM symbols,
   the SRS sequence is determined based at least on a cyclic shift,
   the cyclic shift is determined based at least on an initial cyclic shift value,
   the initial cyclic shift value is determined for every second number of OFDM symbols,
   the second number of OFDM symbols is determined based on the higher layer parameter, and
   the second number of OFDM symbols is less than or the same as the first number of OFDM symbols.

5. The base station apparatus according to claim 4, wherein the initial cyclic shift value is determined based on at least one of the first number of OFDM symbols, the second number of OFDM symbols, or a maximum number of cyclic shifts for the SRS sequence.

6. The base station apparatus according to claim 4, comprising:

   a transmitter configured to transmit a PDCCH to which a DCI format is mapped, wherein
   the initial cyclic shift value is determined by the DCI format.

7. A communication method used for a terminal apparatus, the communication method comprising:

   generating an SRS sequence; and
   transmitting an SRS resource to which the SRS sequence is mapped; and
   receiving a higher layer parameter, wherein
   the SRS resource includes at least a first number of OFDM symbols,
   the SRS sequence is determined based at least on a cyclic shift,
   the cyclic shift is determined based at least on an initial cyclic shift value,
   the initial cyclic shift value is determined for every second number of OFDM symbols,

the second number of OFDM symbols is determined based on the higher layer parameter,
the second number of OFDM symbols is less than or the same as the first number of OFDM symbols.

FIG. 1

Figure 2A: Number of OFDM symbols per slot, slots per frame, and slots per subframe for normal cyclic prefix

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Figure 2B: Number of OFDM symbols per slot, slots per frame, and slots per subframe for extended cyclic prefix

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

# FIG. 2

EP 4 546 924 A1

Point 3000

Set of common resource blocks 3100

Offset 3011 | Resource grid 3001

BWP 3003

Offset 3013

Set of common resource blocks 3200

Offset 3012 | Resource grid 3002

BWP 3004

Offset 3014

Component carrier 300

Frequency

# FIG. 3

One subframe

$N^{subframe,u}_{symb}$ OFDM symbols

Subcarrier index $k_{sc}$

$N^{size,u}_{grid,x} N^{RB}_{sc}$ subcarriers

$N^{RB}_{sc}$ subcarriers

Resource element $(k_{sc}, l_{sym})$

OFDM symbol index $l_{sym}$

FIG. 4

ANTENNA UNIT

• • •

31

RF UNIT

32

30

BASEBAND UNIT

33

RADIO TRANSMISSION AND/OR RECEPTION UNIT
(PHYSICAL LAYER PROCESSING UNIT)

34

MEDIUM ACCESS
CONTROL LAYER
PROCESSING UNIT

RADIO RESOURCE
CONTROL LAYER
PROCESSING UNIT

35

36

HIGHER LAYER PROCESSING UNIT

BASE STATION APPARATUS

3

HIGHER NODE AND OTHER BASE STATION APPARATUS

# FIG. 5

ANTENNA UNIT

• • •

~ 11

RF UNIT

~ 12

~ 10

BASEBAND UNIT

~ 13

RADIO TRANSMISSION AND/OR RECEPTION UNIT
(PHYSICAL LAYER PROCESSING UNIT)

| MEDIUM ACCESS CONTROL LAYER PROCESSING UNIT | RADIO RESOURCE CONTROL LAYER PROCESSING UNIT |

~ 14

15

16

HIGHER LAYER PROCESSING UNIT

TERMINAL APPARATUS

1

# FIG. 6

REs for PBCH

REs for PSS

REs for SSS

700

710

720

713

711

712

Frequency

Time

FIG. 7

FIG. 8

SRS resource 900

$$e^{j(\alpha_i k' + \alpha' l'')}$$

| -1 | -1 | 1 | 1 |
|----|----|----|----|
| 1 | 1 | -1 | -1 |
| -1 | -1 | 1 | 1 |
| 1 | 1 | -1 | -1 |
| -1 | -1 | 1 | 1 |
| 1 | 1 | -1 | -1 |

Symbol set 920 ⟷ Symbol set 921

Symbol 910 — Symbol 911 — Symbol 912 — Symbol 913

Subcarrier k'

OFDM symbol l'

# FIG. 9

## INTERNATIONAL SEARCH REPORT

| | International application No. |
|---|---|
| | **PCT/JP2023/023080** |

### A. CLASSIFICATION OF SUBJECT MATTER

*H04W 72/231*(2023.01)i; *H04W 16/28*(2009.01)i; *H04W 28/16*(2009.01)i; *H04W 72/232*(2023.01)i
FI: H04W72/231; H04W72/232; H04W16/28 150; H04W28/16

According to International Patent Classification (IPC) or to both national classification and IPC

### B. FIELDS SEARCHED

Minimum documentation searched (classification system followed by classification symbols)
H04W72/231; H04W16/28; H04W28/16; H04W72/232

Documentation searched other than minimum documentation to the extent that such documents are included in the fields searched
Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | Moderator (FUTUREWEI). FL Summary #3 on SRS enhancements [online]. 3GPP TSG RAN WG1 #109-e R1-2205391. Internet <URL: https://www.3gpp.org/ftp/tsg_ran/WG1_RL1/ TSGR1_109-e/Docs/R1-2205391.zip>. 17 May 2022, pp. 1, 16-23 <br> section 3.2.1 | 1-7 |
| A | QUALCOMM INCORPORATED. SRS enhancement for TDD CJT and 8 Tx operation [online]. 3GPP TSG RAN WG1 #109-e R1-2205018. Internet <URL: https://www.3gpp.org/ ftp/tsg_ran/WG1_RL1/TSGR1_109-e/Docs/R1-2205018.zip>. 29 April 2022 <br> section 2 | 1-7 |
| A | US 2021/0359819 A1 (HUAWEI TECHNOLOGIES CO., LTD.) 18 November 2021 (2021-11-18) <br> paragraphs [0032], [0048]-[0049] | 1-7 |
| P, X | SHARP. SRS enhancement targeting TDD CJT and 8 TX operation [online]. 3GPP TSG RAN WG1 #110 R1-2207454. 12 August 2022 <br> sections 2-3 | 1-7 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **13 July 2023** | **25 July 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/023080**

| Patent document cited in search report | Publication date (day/month/year) | Patent family member(s) | Publication date (day/month/year) |
|---|---|---|---|
| US 2021/0359819 A1 | 18 November 2021 | WO 2020/155362 A1<br>CN 113273251 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022100122 A

**Non-patent literature cited in the description**

- **NTT DOCOMO**. New SID proposal: Study on New Radio Access Technology. *RP-160671*, 07 March 2016
- Release 17 package for RAN. *RP-193216, RAN chairman, RAN1 chairman, RAN2 chairman, RAN3 chairman, 3GPP TSG RAN Meeting #86, Sitges, Spain*, 09 December 2019
- Release 18 package summary. *RP-213469, RAN chairman, RAN1 chairman, RAN2 chairman, RAN3 chairman, 3GPP TSG RAN Meeting #94-e*, 06 December 2021